(19) Europäisches Patentamt
European Patent Office
Office européen des brevets

(11) EP 0 830 386 B2

(12) NEW EUROPEAN PATENT SPECIFICATION

(45) Date of publication and mention of the opposition decision:
**11.06.2008 Bulletin 2008/24**

(45) Mention of the grant of the patent:
**13.11.2002 Bulletin 2002/46**

(21) Application number: **96913253.9**

(22) Date of filing: **29.04.1996**

(51) Int Cl.:
***C08F 8/00*** *(2006.01)* ***C08F 8/14*** *(2006.01)*
***C08K 5/09*** *(2006.01)* ***B65D 65/38*** *(2006.01)*

(86) International application number:
**PCT/US1996/005937**

(87) International publication number:
**WO 1996/040799 (19.12.1996 Gazette 1996/55)**

# (54) COMPOSITIONS HAVING ETHYLENIC BACKBONE AND BENZYLIC, ALLYLIC, OR ETHER-CONTAINING SIDE-CHAINS, OXYGEN SCAVENGING COMPOSITIONS CONTAINING SAME, AND PROCESS FOR MAKING THESE COMPOSITIONS BY ESTERIFICATION OR TRANSESTERIFICATION OF A POLYMER MELT

ETHYLENISCHE HAUPTKETTEN UND BENZYL-,ALLYL-, ODER ETHER-SEITENKETTEN ENTHALTENDE ZUSAMMENSETZUNGEN, SAUERSTOFF ENTFERNENDE ZUSAMMENSETZUNGEN, UND VERFAHREN ZUR HERSTELLUNG DIESEN ZUSAMMENSETZUNGEN DURCH VERESTERUNG ODER TRANSVERESTERUNG EINES POLYMERSCHMELZES

COMPOSITIONS A SQUELETTE ETHYLENIQUE ET A CHAINES LATERALES BENZYLIQUES, ALLYLIQUES OU CONTENANT DE L'ETHER, COMPOSITIONS DESOXYGENANTES CONTENANT CES COMPOSITIONS ET PROCEDE DE FABRICATION DE CES COMPOSITIONS PAR ESTERIFICATION OU TRANSESTERIFICATION D'UN POLYMERE FONDU

(84) Designated Contracting States:
**AT BE CH DE DK ES FR GB IE IT LI NL PT SE**

(30) Priority: **07.06.1995 US 486553**

(43) Date of publication of application:
**25.03.1998 Bulletin 1998/13**

(73) Proprietor: **Cryovac, Inc.**
**Duncan, S.C. 29334-0464 (US)**

(72) Inventors:
- **CHING, Ta, Yen**
  **Novato, CA 94945 (US)**
- **KATSUMOTO, Kiyoshi**
  **El Cerrito, CA 94530 (US)**
- **CURRENT, Steven, P.**
  **Novato, CA 94947 (US)**
- **THEARD, Leslie, P.**
  **Houston, TX 77042 (US)**

(74) Representative: **Nash, David Allan et al**
**HASELTINE LAKE**
**Redcliff Quay**
**120 Redcliff Street**
**Bristol BS1 6HU (GB)**

(56) References cited:
**EP-A- 0 507 207**
**WO-A-95/02616**
**GB-A- 2 283 240**



Printed by Jouve, 75001 PARIS (FR)

## Description

FIELD OF THE INVENTION

The invention comprises specific compositions having an ethylenic or polyethylenic backbone that are useful in packaging or adhesives applications. This invention also provides specific compositions having an ethylenic or polyethylenic backbone that are useful in scavenging oxygen from packaged products. The invention also comprises a specific process for esterification and/or transesterification of a compound having acid and/or ester side chains on an ethylenic or polyethylenic backbone to produce a compound having a different number and/or type of ester side-chain on the ethylenic or polyethylenic backbone.

BACKGROUND AND SUMMARY OF THE INVENTION

New polymer compositions having properties that are particularly tailored for specific applications are required in response to more sophisticated purchasers of polymers. It is extremely costly and/or difficult to make these compositions directly by synthesis or via solution esterification or transesterification, but manufacturing them in mixing equipment such as an extruder has provided an economical and viable means to supply increasingly-complex polymers to specialized markets requiring them.

In one embodiment, this invention provides a composition as described in claim 1, comprising a transition-metal salt and a compound having an ethylenic or polyethylenic backbone wherein the compound has pendant or terminal moieties which contain a carbon atom that forms a resonance-stabilized free radical under oxygen-scavenging conditions, wherein the pendant or terminal moieties comprise allylic or cyclic ether moieties having at least one alpha hydrogen, the composition having an oxygen scavenging rate equal to or greater than 1 cc oxygen per gram per day in air at 25°C and at 1 atm pressure. In a preferred embodiment, this invention provides compositions as described in claim 30, having a polyethylenic backbone and pendant cyclic ether moieties having at least one alpha hydrogen, selected from tetrahydrofurfuryl and 2-methyltetrahydropyranyl radicals.

In certain preferred embodiments of the compositions of claim 1, the compounds have the following structures:

(I) 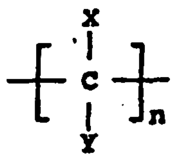

where n is an integer from 2 to approximately 30,000; any X is individually chosen from the group consisting of hydrogen and methyl radical; and where any Y is individually chosen from the group consisting of hydrogen, alkyl radicals containing from 1 to 18 carbon atoms, alkoxy radicals having from 1 to 16 carbon atoms, alkyl ether radicals having from 2 to 18 carbon atoms, alkenyl and alkynyl radicals containing from 2 to 18 carbon atoms, alkenoxy and alkynoxy radicals having from 2 to 16 carbon atoms, alkenyl and alkynyl ether radicals having from 3 to 18 carbon atoms, amine radicals having from 1 to 16 carbon atoms, acid and metal salt of acid radicals, anhydride radicals having from 4 to 24 carbon atoms, ester and amide radicals of acids having from 1 to 16 carbon atoms, aryl radicals and substituted aryl radicals having 6 to 24 carbon atoms, aryl ether radicals and substituted aryl ether radicals having from 6 to 24 carbon atoms, and the radicals of Formula II and Formula III

(II) 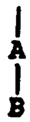

(III) 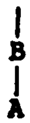

where any A is individually a heteroatom-containing radical (especially a carboxy or amido), and where any B is individually chosen from the group consisting of alkyl ether radicals having from 2 to 18 carbon atoms, alkenyl and alkynyl radicals containing from 2 to 18 carbon atoms, alkenoxy and alkynoxy radicals having from 2 to 16 carbon atoms, alkenyl and alkynyl ether radicals having from 3 to 18 carbon atoms, substituted aryl radicals having 6 to 24 carbon atoms, aryl ether radicals and substituted aryl ether radicals having from 6 to 24 carbon atoms, and the radicals of Formula IV and Formula V:

(IV)

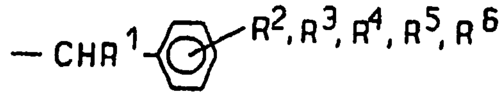

(V)

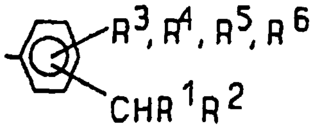

where any $R^1$, $R^2$, $R^3$, $R^4$, $R^5$, and $R^6$ is individually chosen from the group consisting of hydrogen, alkyl radicals containing from 1 to 18 carbon atoms, alkoxy radicals having from 1 to 16 carbon atoms, amine radicals having from 1 to 6 carbon atoms, ester and amide radicals of acids having from 1 to 16 carbon atoms, aryl radicals and substituted aryl radicals having 6 to 24 carbon atoms, aryl ether radicals and substituted aryl ether radicals having from 6 to 24 carbon atoms, and the radicals of Formula II and Formula III; with the proviso that at least about 1 mole % of the composition comprises the radicals of Formula II and Formula III.

Some of these specialty polymers are useful as packaging films and are also useful components for making oxygen-scavenging compositions.

This invention also provides new oxygen-scavenging compositions. It is well known that regulating the exposure of oxygen-sensitive products to oxygen maintains and enhances the quality and "shelf-life" of the product. For instance, by limiting the exposure of oxygen sensitive food products to oxygen in a packaging system, the quality or freshness of food is maintained, and the food doesn't spoil as rapidly. In addition, oxygen-scavenging packaging also keeps the product in inventory longer, thereby reducing costs incurred from waste and having to restock inventory. In the food packaging industry, several means for regulating oxygen exposure have already been developed. These means include modified atmosphere packaging (MAP) and oxygen barrier film packaging.

One method currently being used is through "active packaging", whereby the package containing the food product has been modified in some manner to regulate the food's exposure to oxygen. One form of active packaging uses oxygen-scavenging sachets which contain a composition which scavenges the oxygen through oxidation reactions. One type of sachet contains iron-based compositions which oxidize to their ferric states. Another type of sachet contains unsaturated fatty acid salts on a particulate adsorbent. See U.S. Patent No. 4,908,151. Yet another sachet contains metal/polyamide complex. See U.S. Patent No. 5,194,478.

However, one disadvantage of sachets is the need for additional packaging operations to add the sachet to each package. A further disadvantage arising from the iron-based sachets is that certain atmospheric conditions (e. g., high humidity, low $CO_2$ level) in the package are sometimes required in order for scavenging to occur at an adequate rate. Further, the sachets can present a danger to consumers if accidentally ingested.

Another means for regulating exposure of a packaged product to oxygen involves incorporating an oxygen scavenger into the packaging structure itself. A more uniform scavenging effect throughout the package is achieved by incorporating the scavenging material in the package instead of adding a separate scavenger structure (e.g., a sachet) to the package. This may be especially important where there is restricted air flow inside the package. In addition, incorporating the oxygen scavenger into the package structure provides a means of intercepting and scavenging oxygen as it permeates the walls of the package (herein referred to as an "active oxygen barrier"), thereby maintaining the lowest possible oxygen level in the package.

One attempt to prepare an oxygen-scavenging wall involves the incorporation of inorganic powders and/or salts. See U.S. Patent Nos. 5,153,038, 5,116,660, 5,143,769, and 5,089,323. However, incorporation of these powders andlor salts causes degradation of the wall's transparency and mechanical properties such as tear strength. In addition, these compounds can lead to processing difficulties, especially when fabricating thin films. The oxidation products, which can be absorbed by food in the container, typically would not have FDA approval for human consumption.

EP 0 519 616 discloses an oxygen-scavenging composition comprising a blend of a first polymeric component comprising a polyolefin, the first polymeric component having been grafted with an unsaturated carboxylic anhydride or an unsaturated carboxylic acid, or combinations thereof, or with an epoxide; a second polymeric component having OH, SH, or $NHR^2$ groups where $R^2$ is H, $C_1$-$C_3$ alkyl, substituted $C_1$-$C_3$ alkyl; and a metal salt capable of catalyzing the reaction between oxygen and the second polymeric component, the polyolefin being present in an amount sufficient so that the blend is non phase-separated. A blend of polymers is utilized to obtain oxygen scavenging, and the second polymeric component is preferably a polyamide or a copolyamide such as the copolymer of m-xylylene-diamine and adipic acid (MXD6).

The oxygen scavenging systems disclosed in U.S. Patent Nos. 5,021,515, 5,194,478, and 5,159,005, European Publication EP 0 380 319 as well as PCT Publication Nos. 90/00504 and 90/00578 illustrate attempts to produce an oxygen-scavenging wall. These patent applications disclose incorporating a metal catalyst-polyamide oxygen scavenging system into the package wall. Through catalyzed oxidation of the polyamide, the package wall regulates the amount of oxygen which reaches the interior volume of the package (active oxygen barrier) and has been reported to have oxygen scavenging rate capabilities up to about 5 cubic centimeters (cc) oxygen per square meter per day at ambient conditions. However, this system suffers from significant disadvantages.

One particularly limiting disadvantage of polyamide/catalyst materials can be a low oxygen scavenging rate. U.S. Patent No. 5,021,515, Example 7, illustrates that adding these materials to a high-barrier package containing air produces a package which is not generally suitable for creating an internal oxygen level of less than 0.1% (starting with air) within a period of four weeks or less at room temperature, as is typically required for headspace oxygen scavenging applications.

There are also disadvantages to having the oxygen-scavenging groups in the backbone or network structure in this type of polyamide polymer. The basic polymer structure degrades rapidly and is quickly weakened upon reaction with oxygen. This can adversely affect physical properties such as tensile or impact strength of the polymer. The degradation of the backbone or network of the polymer can increase the permeability of the polymer to those materials sought to be excluded, such as oxygen.

Moreover, polyamides such as MXD6 are typically incompatible with thermoplastic polymers used in flexible packaging walls, such as ethylene-vinyl acetate copolymers and low density polyethylene. Even further, when many polyamides are used by themselves to make a flexible package wall, they may result in inappropriately stiff structures. Many polyamides also incur processing difficulties and higher costs when compared with the costs of thermoplastic polymers typically used to make flexible packaging. Even further, they are sometimes difficult to heat seal. Thus, all of these are factors to consider when selecting materials for packages, especially flexible packages and when selecting systems for reducing oxygen exposure of packaged products.

Another approach to scavenging oxygen is disclosed in EP 0 507 207, which discloses an oxygen-scavenging composition comprising an ethylenically unsaturated hydrocarbon and a transition metal catalyst. This patent states that ethylenically unsaturated compounds such as squalene, dehydrated castor oil, and 1,2-polybutadiene are useful oxygen scavenging compositions, and ethylenically saturated compounds such as polyethylene and ethylene copolymers are used as diluents. Compositions utilizing squalene, castor oil, or other such unsaturated hydrocarbon typically have an oily texture, which is undesirable for applications such as wrapping meat for sale in retail grocery stores. Further, polymer chains which are ethylenically unsaturated would be expected to either cross-link to become brittle or to degrade upon scavenging oxygen, weakening the polymer due to polymer backbone breakage.

Further oxygen scavenging polymers are disclosed in WO9502616, which describes polymers whose compositions comprise a transition-metal salt and an ethylenic backbone having a pendant or terminal benzyl radical.

U.S. Patent Nos. 4,717,759, 4,994,539, and 4,736,007, which are incorporated by reference in their entirety, disclose ethylene copolymers which comprise 85.0 to 99.995 mol % of an ethylene unit, 0.005 to 5 mol % of a comonomer unit represented by Formula (VI)

(VI) 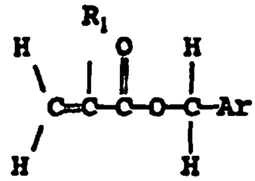

wherein Ar is

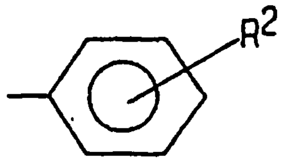

or

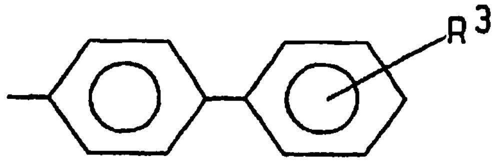

$R_1$ is a hydrogen atom or a methyl group, each of $R_2$ and $R_3$ is a hydrogen atom, a chlorine atom or a straight-chain or a side-chain alkyl group having 1 to 4 carbon atoms, and 0 to 10 mol % of an ethylenic unsaturated monomer unit, the ethylene copolymer having a density of 0.860 to 0.970 g/cm$^3$ and a melt index of 0.05 to 100 g/10 minutes. The patent states that copolymers may be produced using either a Ziegler catalyst or through polymerization catalyzed by free radicals. These polymers are limited to having less than 5 mol % of the comonomer unit and are useful for electrical insulation. Although these polymers may be used to make oxygen-scavenging compositions, these polymers do not themselves scavenge oxygen.

What has been needed is an oxygen-scavenging polymer composition that is easily processed, especially into thin film, and that does not suffer rapid polymer backbone oxidation as the composition scavenges oxygen. This invention supplies compositions overcoming these problems.

The oxygen-scavenging compositions of this invention comprise a transition-metal salt and a compound having an ethylenic or polyethylenic backbone as described in claims 1, 25, and 28.

Among other factors, the present invention is based on our finding that compositions as described herein are highly effective oxygen scavengers in terms of rate of oxygen scavenging and/or oxygen scavenging capacity, particularly where the compositions contain a heteroatom-containing radical such as a carboxy or amido group directly bonded to an allylic radical, or an ether radical. In many instances, these compositions have excellent physical and processing properties which permit their incorporation into a wide range of packaging applications. We have found that, typically, films of these compositions are easily made using conventional techniques. The compositions are usually compatible with many common thermoplastic materials used in packaging, particularly polyethylene and copolymers of ethylene and alkyl acrylates or methacrylates.

Furthermore, many of the compositions of the present invention have been found to have surprisingly reduced induction periods in scavenging oxygen upon exposure to ultraviolet (UV) radiation without the need for added photoinitiators.

This invention also provides a process for making polymers, as defined in claims 48 and 56. Transesterification of a polymer can produce a number of different polymers. For example, M. Lambla et al., 27 Polymer Sci. and Eng'g, No. 16 (mid-Sept. 1987) 1221-28, discuss the transesterification of ethylene vinyl acetate copolymer with an alcohol in an extruder and in the presence of a tin catalyst to form ethylene vinyl alcohol copolymer, which has a polyethylenic backbone and pendant alcohol moieties. Also, D. Seebach et al., *Synthesis* (Feb. 1982) 138-41, discuss transesterification of an ester with an alcohol in solution using a titanium catalyst. The reactions require from 3 to 120 hours.

U.S. Pat. No. 4,767,820 to M. Keogh discloses compositions useful as extrudates about wires and cables which comprise hydrolyzable pendant silane moieties and tetramethyl titanate dispersed in a normally solid alkylene-alkyl acrylate copolymer matrix. Transalkyladon of the silane and alkyl acrylate moieties results in a cross-linked product.

Not all transesterification reactions are useful. U.S. Pat. No. 5,023,284 to M. Cheung et al. notes that transesterification occurs during melt-blending of two polyesters due to the presence of residual titanium catalyst and causes embrittlement and other deleterious effects.

What has been missing in the prior art is an economical process for controlling the esterification and/or transesterification of a polymer having a polyethylenic backbone and pendant acid and/or ester moieties to produce a polymer having a polyethylenic backbone and pendant ester moieties that differ in number and/or type from the unreacted polymer. In one embodiment, this invention provides an economical process as defined in claim 48 for esterifying or transesterifying a polymer comprising forming a melt of a polymer having a polyethylenic backbone and pendant acid and/or ester

moieties, and contacting the melt in an extruder under esterification or transesterification conditions with a compound capable of esterifying or transesterifying the acid or ester moieties, where the polymer undergoes esterification and/or transesterification but not alcoholysis, and the polymer after esterification and/or transesterification has a polyethylenic backbone and pendant ester and/or acid moieties.

The process further comprises adding an amount of transition metal salt into a melt of selected esterified or transesterified polymers made in the above process in an amount effective to promote oxygen scavenging by the esterified or transesterified polymer. In one preferred embodiment, an ethylene alkyl acrylate copolymer is transesterified in an extruder to form an ethylene hydrocarbyl acrylate copolymer. In another preferred embodiment of the process, a cobalt salt is added to the transesterified polymer to make an effective oxygen scavenger. In a third preferred embodiment, the processed polymer is exposed to actinic radiation.

Among other factors, it has been discovered that a melt of a polymer having pendant acid and/or ester moieties can be esterified and/or transesterified with a compound capable of esterifying or transesterifying the acid and/or ester moieties by blending the melt and the compound in suitable polymer mixing equipment under esterification and/or transesterification conditions, thereby producing a polymer having pendant ester moieties which differ in number and/or type from the unreacted polymer and combined with a transition metal salt. This process provides fast reaction times and accurate control over the extent of esterification and/or transesterification, thereby providing an economical means to produce polymers having properties tailored to specific applications. The process also provides a means to make highly-effective oxygen scavenging compositions.

DETAILED DESCRIPTION OF PREFERRED EMBODIMENTS

The process of this invention provides an economical, convenient, and effective means for making compositions of this invention. These compositions can be divided into two categories: specialty polymers, and specialty polymers capable of scavenging oxygen.

A) SPECIALTY POLYMERS

The specialty polymers can be divided into three general categories: allylic, cyclic ether-containing, and specialty polymers containing functional side-chains. Each contains an ethylenic or polyethylenic backbone with pendant, allylic, ether-containing, or functional moieties.

A polyethylenic backbone consists essentially of a chain structure or backbone of saturated carbon atoms which, generally, is created during a polymerization process. For example, homopolymerization of ethylene provides a polyethylenic backbone. Copolymerization of ethylene and acrylic acid, methacrylic acid, alkyl acrylate, or alkyl methacrylate also results in a polyethylenic backbone with pendant acid or ester moieties. Any polymerization which provides a composition essentially of the form:

(VII) 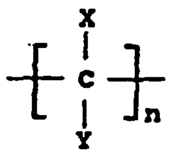

provides a composition having an ethylenic or polyethylenic backbone.

In general, n is a number between 2 and approximately 30,000. A composition which has a polyethylenic backbone has a melt index from about 0.1 to 1000 g/10 min. A composition which has an ethylenic backbone has fewer carbon atoms in its backbone than an identical composition having a melt index of 1000 g/10 min. or less.

In one preferred embodiment, a polymeric composition of the present invention contains between about one and about ten mole percent of the pendant allylic, cyclic ether-containing, and/or functional moieties. More preferably, the composition contains between about two and six percent, and more preferably still, between about two and three mole percent of these pendant moieties. Preferably, the pendant moieties are bonded directly to a heteroatom-containing group. The exact amount of pendant moieties and heteroatom-containing radicals is normally determined by the application in which the composition is going to be employed.

2) Specialty polymers having allylic hydrogen-containing side chains

In one embodiment, a composition of the present invention as defined in the claims comprises an ethylenic or polyethylenic backbone and moieties which contain a radical having an allylic hydrogen and which are pendant or terminal

to the ethylenic or polyethylenic backbone. A pendant moiety which contains a radical having allylic hydrogen, as that term is used herein, is any group which is a side-chain or branch or is terminal to the ethylenic or polyethylenic backbone and which contains at least one allylic hydrogen.

The radical containing allylic hydrogen may be cyclic, linear, or branched, and may be unsubstituted or substituted with alkyl, aryl, or heteroatom-containing radicals, for example. The radical containing allylic hydrogen may contain more than one allylic hydrogen. Preferably, the radical contains at least four allylic hydrogen atoms. The radical may be part of an amide or ester. Examples include poly(1,2-butadienyl) ester, Nopol ester (6,6-dimethylbicyclo[3.1.1]hept-2-ene-ethyl ester), 3-methyl-3-butenyl ester, 2,6-dimethyloct-2,6-dienyl ester, cinnamyl ester, trimethylpropane diallyl ether ester, 2,6,10-trimethyldodec-2,6,10-trienyl ester, and oleyl and/or linoleyl ester radicals.

3) Cyclic Ether-containing specialty polymers

In one embodiment, a composition of the present invention as defined in the claims comprises an ethylenic or polyethylenic backbone and hydrocarbyl moieties which contain cyclic ether and which are pendant or terminal to the ethylenic or polyethylenic backbone. A pendant moiety which contains ether, as that term is used herein, is any group which is a side-chain or branch or is terminal to the ethylenic or polyethylenic backbone and which contains at least one ether group.

The moiety containing cyclic ether may be unsubstituted or substituted with alkyl, aryl, or other radicals containing a heteroatom, for example. The moiety may contain ether within its major structure, or ether may be pendant to the major structure of the moiety. The cyclic moiety may be mono-cyclic, or may consist of multiple rings such as benzofuran. Examples include tetrahydrofurfuryl and 2-methyltetrahydropyranyl radicals.

4) Specialty polymers that contain functional side-chains

A further embodiment of the invention is a composition as described in claim 35. Functional additives such as antioxidants, plasticizers, UV stabilizers (screeners or absorbers), UV initiators, corrosion inhibitors, and colorants can be at least a portion of the moiety attached to the ethylenic or polyethylenic backbone. These compositions can be made by reacting a copolymer with side-chains capable of transesterifying with an alcohol of the desired additive to form a composition having an ethylenic or polyethylenic backbone and a functional side-chain that contains the desired functional additive. The melt-blend esterification and/or transesterification process described below is one method for making these compositions.

Specialty polymers that contain functional side-chains have the following advantages over blends of a polymer with the functional additives:

a) lower volatility -- this results in less plate-out of the functional additive during processing and also less waste of the additive;

b) lower extractables -- since the functional additive is chemically bound to the polymer instead of being blended with the polymer, less of the functional additive is extractable in FDA extraction tests or soluble in food or drinks; and/or

c) lower toxicity if ingested - since high molecular-weight molecules are not absorbed by biological systems, the functional side-chains are more likely to pass through the organism without interacting with the organism's life processes.

Examples of this type of side-chain to the polyethylenic backbone include esters such as $C_1$-$C_{18}$ alkyl ester as defined in claim 35, and the following esters and amides:

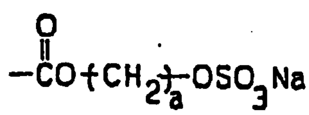

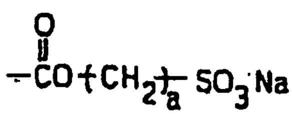

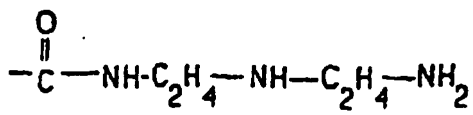

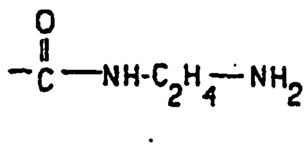

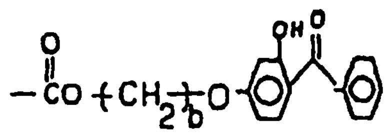

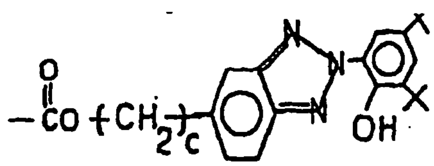

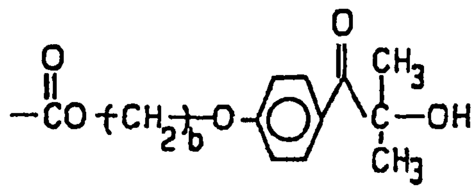

where a is an integer between 1 and 18, inclusive, b is an integer between 1 and 12, inclusive, and c is an integer between 0 and 12, inclusive.

Compositions having a polyethylenic backbone and pendant ester moieties that have an epoxy radical can be made by esterifying or transesterifying a polymer such as ethylene acrylic acid copolymer or ethylene alkyl acrylate copolymer with a compound that contains an epoxy radical. Such compounds include $C_1$-$C_{18}$ alcohols that have at least one epoxy radical substituted on a carbon atom.

These compositions can be used to modify asphalt properties or to provide nylon with improved impact resistance, for example, or as intermediates to form other polymeric products.

5) Other components in compositions of this invention

In a preferred embodiment, a composition of the present invention as defined in the claims also contains an alkyl acrylate, alkyl methacrylate, acrylic acid, methacrylic acid, and/or metal salt of acrylic or methacrylic acid within the backbone. This type of composition has a polyethylenic backbone which contains pendant alkyl ester, acid, and/or metal salt of acid moieties as well as pendant allylic, cyclic ether, and/or functional moieties discussed above. Preferred alkyl acrylates are butyl and ethyl acrylate, and most preferred is methyl acrylate (MA). Preferred acrylic acids are acrylic acid and methacrylic acid. Sodium, potassium, zinc, and lithium salts of acrylic and methacrylic acid are preferred. These ester, acid, and salt moieties can provide good adhesive properties in tie layers, for example.

Additives may also be included in the composition to impart properties desired for a particular use. Such additives include, but are not necessarily limited to, fillers, pigments, dyestuffs, antioxidants, stabilizers, processing aids, plasticizers, fire retardants, anti-fogging agents, etc. The amount of these additives vary by use and typically comprise less than 10%, and preferably less than 5%, of the total weight of the composition.

B) SPECIALTY POLYMERS THAT SCAVENGE OXYGEN

Oxygen-scavenging compositions of this invention as defined in the claims comprise a transition metal salt and a compound having an ethylenic or polyethylenic backbone and having pendant moieties which contain a carbon atom that can form a free radical that is stabilized by an adjacent group. The adjacent group bears the high energy of the unpaired electron through resonance structures and thereby stabilizes the free radical, so that the free radical can exist for a substantially longer time than a free radical would exist in the absence of a stabilizing group. The carbon atom that can form a free radical is bonded to an atom of the adjacent group that 1) has at least one pair of p electrons that are unbonded or that are pi-bonded to other atoms in the group, and that 2) is capable of overlapping its p orbital with the orbital of the free radical. The group can then bear the additional energy of a free electron to stabilize the free radical. The conformation of the molecule at the site of free radical formation must also be such that the orbital of the free radical is able to overlap with the p orbital of the atom in the adjacent group. Thus, a carbon atom having a hydrogen atom adjacent to a an allylic radical, or a cyclic ether-containing radical can form a free radical that is resonance-stabilized by the adjacent double bond, or oxygen, respectively.

The resonance-stabilized free radical is preferably formed under oxygen scavenging conditions. A polymer is exposed to oxygen scavenging conditions when it contains a sufficient amount and type of transition metal salt to promote oxygen scavenging by the polymer, and the polymer is exposed to an oxygen-containing fluid such as air. An oxygen-scavenging composition of this invention comprises a transition-metal salt and a compound having an ethylenic or polyethylenic backbone, wherein the compound has pendant or terminal moieties which contain a carbon atom that forms a resonance-stabilized free radical under oxygen-scavenging conditions. This composition has an instantaneous oxygen scavenging rate in air of at least about 1.0 cc of oxygen/day/g/atm. at 25°C.

In one embodiment, a composition of this invention comprises a transition-metal salt and a specialty polymer as described above. A transition-metal salt, as the term is used herein, comprises an element chosen from the first, second and third transition series of the periodic table of the elements, particularly one that is capable of promoting oxygen scavenging. This transition-metal salt is in a form which facilitates or imparts scavenging of oxygen by the composition of this invention. A plausible mechanism, not intended to place limitations on this invention, is that the transition element can readily inter-convert between at least two oxidation states and facilitates formation of free radicals. Suitable transition-metal elements include, but are not limited to, manganese II or III, iron II or III, cobalt II or III, nickel II or III, copper I or II, rhodium II, III or IV, and ruthenium. The oxidation state of the transition-metal element when introduced into the composition is not necessarily that of the active form. It is only necessary to have the transition-metal element in its active form at or shortly before the time that the composition is required to scavenge oxygen. The transition-metal element is preferably iron, nickel or copper, more preferably manganese and most preferably cobalt.

Suitable counter-ions for the transition metal element are organic or inorganic anions. These include, but are not limited to, chloride, acetate, stearate, palmitate, 2-ethylhexanoate, citrate, glycolate, benzoate, neodecanoate or naphthenate. Organic anions are preferred. Particularly preferable salts include cobalt (II) 2-ethylhexanoate, cobalt benzoate, and cobalt (II) neodecanoate. The transition-metal element may also be introduced as an ionomer, in which case a polymeric counter-ion is employed. Such ionomers are well known in the art. *See* U.S. Patent No. 3,264,272, which is incorporated by reference in its entirety.

The composition of the present invention contains a sufficient quantity of the transition-metal salt to promote oxygen scavenging in the polymer. Generally, this requires a ratio of moles of free radical-generating carbon atoms to moles of transition-metal element between about 2000:1 to about 10:1. Preferably, this molar ratio is between 200:1 and 20:1. The type and amount of transition-metal salt are selected to give an instantaneous oxygen scavenging rate in the polymer of at least about 1.0 cc oxygen per gram of oxygen-scavenging composition per day in air at 25°C at 1 atmosphere pressure, and preferably the amount and type of transition-metal salt are selected to give an instantaneous oxygen scavenging rate of at least about 5 cc $O_2$ per g of oxygen-scavenging composition per day in air at 25°C at 1 atm. pressure after the induction period ends. The preferred amount of transition-metal element will typically vary with which transition-metal salt is used.

Oxygen-scavenging compositions of this invention can sustain their mechanical properties over greater periods of time than other oxygen-scavenging compositions such as polybutadiene, which contain oxidation sites in the backbone and/or immediately adjacent to the backbone. Oxygen-scavenging compositions of this invention are easily processed by conventional equipment and can be blended or coextruded with a wide range of polymers. Also, it has been found that many of the oxygen scavenging compositions of this invention, particularly ester and amide oxygen scavengers, do not require added photo-initiators when exposing them to UV light to reduce their oxygen-scavenging induction period.

2) Oxygen-scavenging specialty polymers containing allylic side-chains

In one embodiment, this invention provides compositions effective to scavenge oxygen as described in claims 1, 25 and 28.

It is expected that, as the side-chain containing allylic hydrogen oxidizes, the ethylenic or polyethylenic backbone remains intact for a longer period of time than when the point of unsaturation is located in or immediately adjacent to the backbone, as it is in polybutadiene alone. Since the backbone remains intact longer, the mechanical properties are maintained over a longer period of time than when polybutadiene alone is oxidized.

In one embodiment, the compositions, effective to scavenge oxygen, comprise a transition metal salt and a component having an ethylenic or polyethylenic backbone and having pendant moieties, wherein each moiety contains at least four allylic hydrogen atoms. This composition scavenges oxygen rapidly and has high oxygen-scavenging capacity.

In another embodiment, this invention provides compositions as defined in the claims effective to scavenge oxygen comprising a transition metal salt and a component having an ethylenic or polyethylenic backbone and having pendant moieties which contain a cyclic radical containing allylic hydrogen. A cyclic radical containing allylic hydrogen does not include an aromatic radical where the cyclic portion of the radical is solely aromatic.

Examples of pendant moieties which contain allylic hydrogen include poly(1,2-butadienyl) ester, Nopol ester (6,6-dimethylbicyclo[3.1.1]hept-2-ene-ethyl ester), 3-methyl-3-butenyl ester, 2,6-dimethyloct-2,6-dienyl ester, cinnamyl ester, trimethylpropane diallyl ether ester, 2,6,10-trimethyldodec-2,6,10-trienyl ester, and oleyl and/or linoleyl ester radicals. Oxygen-scavenging specialty polymers containing allylic hydrogen side chains, especially side chains having cyclic moieties that contain allylic hydrogen, scavenge oxygen effectively at typical refrigeration temperatures (about 4 to 6°C).

3) Cyclic Ether-containing oxygen-scavenging specialty polymers

In one embodiment, this invention provides compositions as defined in the claims effective to scavenge oxygen comprising a transition metal salt and a component having an ethylenic or polyethylenic backbone and having pendant cyclic ether moieties which have at least one hydrogen on a carbon atom adjacent to the ether radical. This component is preferably a cyclic ether-containing specialty polymer, as described above, where there is at least one hydrogen on a carbon atom adjacent to the ether radical.

The pendant radical is a cyclic ether, especially a cyclic ether having from 2-7 carbon atoms. The cyclic moiety may be mono-cyclic, or may consist of multiple rings. Examples of suitable pendant radicals include tetrahydrofurfuryl and 2-methyltetrahydropyranyl.

4) Additive for oxygen-scavenging specialty polymers

One additive that may be included in any of the oxygen-scavenging compositions above is a photoinitiator, which acts to reduce the induction period of many oxygen scavenging compositions. *See* U.S. Patent No. 5,211,875, which discusses photoinitiators.

C) METHODS OF MAKING COMPOSITIONS OF THIS INVENTION

Compositions of this invention can be made by many means. Monomers containing allylic, and/or cyclic ether-containing radicals can be oligomerized or polymerized alone or with comonomers such as ethylene, propylene or other olefins, and other comonomers such as (meth)acrylic acid and alkyl (meth)acrylate to provide an ethylenic or polyethylenic backbone after polymerization. Methods for this type of polymerization are well-known in the art and include solution, slurry, or gas-phase polymerization in the presence of a catalyst, such as a free radical catalyst, a Ziegler Natta catalyst, or a metallocene polymerization catalyst.

A preferred way to make compositions of this invention is to produce a polymer intermediate and react the intermediate with a modifying compound to form a polymer with a polyethylenic backbone and with pendant allylic, and/or cyclic ether-containing moieties. When making an oxygen-scavenging composition in this manner, the transition-metal salt can be incorporated into the composition before, during, or after reacting the polymer intermediate with the modifying compound.

There are many types of polymer intermediates which are useful in making compositions of the present invention. For example, an alkyl methacrylate can be homopolymerized by way of addition polymerization to form a polymer having an ethylenic or polyethylenic backbone with pendant methyl groups and with pendant alkyl ester groups. Copolymerization of ethylene with an alkyl acrylate or methacrylate also forms a useful polymer intermediate. One preferred copolymer is ethylene methyl acrylate copolymer, sold by Chevron Chemical Company as EMAC® copolymer.

High melt-point ethylene-alkyl acrylate copolymers are also useful polymer intermediates. These copolymers have a melt-point temperature at least about 6 deg F greater than a reference ethylene-alkyl acrylate copolymer, where the reference copolymer is made in a multi-zone autoclave reactor and the ratio of alkyl acrylate to ethylene in a reaction zone when making the reference copolymer is about equal to the overall ethylene to alkyl acrylate ratio fed to the multi-zone autoclave reactor. A high melt-point ethylene-methyl acrylate copolymer typically has a melt-point temperature

greater than the value obtained from the expression:

$$\text{temperature (deg F)} = 248 - 2.9Y$$

where Y is the weight percent of methyl acrylate in the high melt-point ethylene-methyl acrylate copolymer and where Y is greater than 10. Similarly, a high melt-point ethylene-butyl acrylate copolymer typically has a melt-point temperature greater than the value obtained from the expression:

$$\text{temperature (deg F)} = 240\text{-}2.1Z$$

where Z is the weight percent of butyl acrylate in the high melt-point ethylene-butyl acrylate copolymer and where Z is greater than 15. High melt-point ethylene-allyl acrylate copolymers can be made by a process comprising:

1) feeding overall an amount by weight, A, of alkyl acrylate and an amount by weight, E, of ethylene to a multi-zone autoclave polymerization reactor;
2) introducing an effective amount of an initiator and at least a portion, $E_1$, of the total amount of ethylene into a first reaction zone of the reactor;
3) concurrently introducing a portion, $A_1$, of alkyl acrylate to said first reaction zone such that the ratio $A_1/E_1$ is at least about 20% more than or is at least about 20% less than the ratio A/E for the reactor overall; and
4) feeding any remaining portions of initiator, ethylene and alkyl acrylate to a subsequent reaction zone or zones.

High melt-point ethylene-alkyl acrylate copolymers are disclosed in U.S. Ser. Nos. 07/764,861, filed Sep. 24, 1991, 07/947,870, filed Sep. 21, 1992, and 08/233,180, filed Apr. 26, 1994.

Other useful polymer intermediates include ethylene alkyl acrylate ionomer, ethylene acrylic acid copolymer, ethylene acrylic acid ionomer, and ethylene vinyl acetate copolymer. Yet another polymer intermediate is a polyethylenic-backbone polymer containing maleic anhydride moieties. For example, Lotader, a product of ELF Atochem, contains ethylene, alkyl acrylate and maleic anhydride moieties in which the unsaturated carbon atoms of maleic anhydride become saturated carbon atoms within the polyethylenic backbone. Alternatively, maleic anhydride may be grafted to a polymer having a polyethylenic backbone by, for example, free-radical grafting. Methods for making these polymers are well-known in the art. See, for example, U.S. Patent No. 4,506,056. An ester, acid, acetate, or anhydride in the moieties pendant to the polyethylene backbone is then reacted with a compound to form a composition of this invention or a polymer useful in the compositions of this invention.

The modifying compound which is reacted with the polymer intermediate is selected on the basis of its reactivity with the particular polymer intermediate and on the basis of whether the polymer resulting from the reaction contains an allylic, and/or cyclic ether-containing radical. The allylic or cyclic ether compound may be substituted or unsubstituted, as discussed previously, and may also contain a heteroatom to enhance any oxygen-scavenging activity desired from the allylic, or heteroatom-containing moiety. Preferred modifying compounds include the transesterifying compounds listed in Tables 3 and 4.

Imidation (the reaction of an anhydride with a primary amine to form an imide), esterification, transesterification, or transamidation may be performed in an autoclave. Reaction conditions will vary, depending on the reactants. A transesterification or transamidation catalyst may be used. For a polymer intermediate having alkyl acrylate or methacrylate pendant moieties, typically the reaction will be performed at a temperature between 180 and 300°C and at a pressure of between 50 and 1000 psi for a period of time between ½ and 8 hours. Amidation of an acid or transamidation may also be performed using reactive extrusion, as discussed below.

Esterification, tzansesterification, transamidation, or imidation may also be performed by dissolving an ethylenic or polyethylenic component such as a polymer in a solvent and heating the component, the modifying compound and optionally the transesterification or transamidation catalyst at reflux conditions. The conditions can vary, depending on the particular composition sought. Typically the reaction will be performed at a temperature between 130 and 240°C for a period of time between ½ and 16 hours.

Esterification or transesterification can be facilitated by use of transesterification catalysts, which are well-known in the art. Suitable transesterification catalysts include strong non-oxidizing acids, Group I alkoxides, and Group IVB alkoxides, such as di-butyl tin dilaurate, sodium methoxide, toluene sulfonic acid, tetrabutyl titanate, tetraisopropyl titanate, and tetraethyl titanate, with tetraalkyl titanate being particularly preferred. Sodium hydroxide may also be used. Titanate catalysts are available from Hüls America.

Likewise, transamidation can be facilitated by use of transamidation catalysts, which are well-known in the art. Suitable transamidation catalysts include 2-hydroxy pyridine and sodium methoxide, with 2-hydroxy pyridine being particularly preferred. These catalysts are available from Aldrich.

D) ESTERIFICATION OR TRANSESTERIFICATION OF A POLYMER MELT

A particularly preferred method of making ester compositions as defined in the claims of the present invention is through esterification and/or transesterification of a polymer melt. In this process, a composition of the present invention or preferably the ethylenic or polyethylenic component of a composition of the present invention is made by melt-blending a polymer intermediate with an allylic, or cyclic ether-containing compound (such as an alcohol or amine of these radicals) and, optionally, with the transesterification and/or transamidation catalyst and the transition-metal salt. Reaction conditions are chosen to promote esterification, transesterification and/or imidation. These reactions will normally occur in the presence of a suitable catalyst. The resulting polymer can be extruded into any convenient form, such as pellets or film. The esterification and transesterification process is discussed in further detail below.

1) The polymer to be transesterified

The polymer to be transesterified, also referred to herein as an ethylene copolymer, has a polyethylenic backbone and pendant ester and/or acid moieties. This polymer has a melt index within the range of about 0.3 to about 1000 grams per 10 minutes (ASTM Method No. D-882). Preferably, the melt index is between about 0.5 and about 100, and more preferably is between about 1 and about 10 g/10 min.

The ethylene copolymer also contains ester and/or acid groups or radicals which are pendant to the polyethylenic backbone. A pendant moiety which contains an ester or acid radical is any group which is a side-chain or branch to the polyethylenic backbone and which contains an ester radical, an acid radical, or a radical that can be considered to be equivalent to an acid, such as an anhydride. In Formula (I) above, the moieties X and Y are pendant moieties.

The hydrocarbyl radical on the ester is one which is capable of being esterified and/or transesterified under esterification or transesterification conditions by the transesterifying compound and the optional transesterification catalyst(s). The ester radical may have a hydrocarbyl radical that is substituted with a heteroatom or a heteroatom-containing radical. A heteroatom is an element other than carbon and hydrogen. Examples of a substituted hydrocarbyl radical on unreacted ethylene copolymers are methoxy ethyl and mono-methoxy polyethylene glycol. The ester radical preferably has an unsubstituted hydrocarbyl radical. An unsubstituted hydrocarbyl radical for the purposes of this invention includes a $C_1$-$C_8$ alkyl, preferably $C_1$-$C_4$ alkyl, and more preferably a methyl radical.

In one embodiment, the polymer to be esterifted and/or transesterified is a homopolymer, such as poly(methyl methacrylate). In another embodiment, the polymer to be esterified and/or transesterified is a copolymer of styrene and methyl methacrylate or poly(methyl methacrylate). The polymer to be esterified and/or transesterified is a polymer having the structure of Formula I above, where the substituent "Y" is an acid or ester.

In a preferred embodiment, the ethylene copolymer to be esterified and/or transesterified contains a major portion of ethylene. Typically, the ethylene copolymer contains from about 83 to about 99 mole percent ethylene, based on all comonomers present in the polymer. Preferably, the polymer contains about 90.7 to 98 mole percent, and more preferably, contains 93 to 97 mole percent ethylene.

In one preferred embodiment, the polymer to be esterified and/or transesterified is an ethylene alkyl acrylate copolymer. As used herein, the term "ethylene alkyl acrylate copolymer" also includes ethylene-alkyl methacrylate copolymer and ethylene-alkyl acrylate-alkyl methacrylate copolymer. Ethylene-alkyl acrylate copolymers and methods of making them are well-known in the art. Particularly preferred is ethylene-methyl acrylate copolymer. High melt-point ethylene-alkyl acrylate copolymers are also useful polymer intermediates.

The ethylene copolymer may optionally contain other comonomers which, when present in the polymer, do not interfere with the esterification and/or transesterification reaction. The optional comonomers may react with the transesterifying compound, but interference for the purposes of this invention occurs when less than 5 % of the ester or acid moieties in the polymer that would have otherwise transesterified if the optional comonomer was not present transesterify in the presence of a stoichiometric excess of transesterifying compound because of the presence of the optional comonomer.

One example of an ethylene copolymer having other comonomers which do not interfere with the transesterification reaction is a partially saponified ethylene alkyl acrylate copolymer. Sodium, lithium, or potassium ionomers of an ethylene alkyl acrylate copolymer are described in U.S. Ser. No. 08/144,173, filed Oct. 27, 1993 (see US Patent No. 5 576 396). Preferred is ethylene-methyl acrylate-sodium acrylate copolymer having between about 1 and about 17 mole percent methyl acrylate and about 1 and about 9 mole percent sodium acrylate. Another example is Lotader, a product of ELF Atochem, which is an ethylene alkyl acrylate copolymer which contains maleic anhydride moieties whose unsaturated carbon atoms became saturated carbon atoms within the polyethylenic backbone. Alternatively, maleic

anhydride may be grafted to a polymer having a polyethylenic backbone by, for example, free-radical grafting. Methods for making these polymers are well-known in the art. See, for example, U.S. Patent No. 4,506,056.

2) The transesterifying compound

The term "transesterifying compound" includes compounds comprising an allylic or cyclic ether moiety which transesterify with a second compound as well as compounds which esterify a second compound. The transesterifying compound is selected from compounds having the ability to participate in an esterification or transesterification reaction for the particular ethylene copolymer chosen for the reaction. The transesterifying compound may itself be a polymer that is capable of supplying a hydrocarbyl radical to the ethylene copolymer chosen for transesterification. In this way, hydrocarbyl groups may be interchanged between the two polymers, or the two polymers may become cross-linked with one another.

When the ethylene copolymer is an ethylene alkyl acrylate copolymer or an ethylene acrylic acid copolymer, the transesterifying compound comprises an allylic or cyclic ether moiety and may be an alcohol, dial, polyol, ether-ol, ene-ol. Alcohols are preferred transesterifying compounds for these copolymers. The alcohol is preferably a primary or secondary alcohol. Preferred alcohols are listed in Tables 3, 4, and 5.

The hydrocarbyl radical of the transesterifying compound includes alkyl radicals containing from 1 to 18 carbon atoms, alkoxy radicals having from 1 to 16 carbon atoms, alkyl ether radicals having from 2 to 18 carbon atoms, alkenyl and alkynyl radicals containing from 2 to 18 carbon atoms, alkenoxy and alkynoxy radicals having from 2 to 16 carbon atoms, alkenyl and alkynyl ether radicals having from 3 to 18 carbon atoms, amine radicals having from 1 to 16 carbon atoms, acid and metal salt of acid radicals, anhydride radicals having from 4 to 24 carbon atoms, ester and amide radicals of acids having from 1 to 16 carbon atoms, aryl radicals and substituted aryl radicals having 6 to 24 carbon atoms, and aryl ether radicals and substituted aryl ether radicals having from 6 to 24 carbon atoms.

The hydrocarbyl radical of the transesterifying compound may be a hydrocarbyl radical or may be a hydrocarbyl radical substituted with a heteroatom or a heteroatom-containing radical. The hydrocarbyl radical may therefore also contain halogen, acetyl, nitro, or nitrile moieties, for example.

The amount of transesterifying compound used in the transesterification reaction is typically between about 0.05 mole of hydrocarbyl radical from the transesterifying compound per mole of ester on the ethylene copolymer to 2 moles per mole. Preferably, the amount of transesterifying compound is at or slightly in excess of the stoichiometric amount required to obtain the desired extent of transesterification of acid and/or ester moieties. Some transesterifying compounds are solid, although the transesterifying compounds are usually liquids at the temperature at which the transesterification reaction occurs. A solid compound may be fed to the process neat, or it may be fed to the process in a suitable solvent, so long as the compound is mixed uniformly in the melt. The amount of liquid fed to the process is preferably minimized so that downstream processing to remove the liquid is not required. A transesterifying compound with a low boiling-point may require that the process operate at a pressure above atmospheric to prevent the transesterifying compound from boiling prior to esterifying or transesterifying the polymer.

When the process is used to make an oxygen-scavenging composition, an electron-donating group such as a heteroatom or heteroatom-containing radical generally improves the oxygen-scavenging abilities of the composition. The ester or amide group on the polymer may supply the heteroatom, or the heteroatom-containing radical may be an ether. When present, the heteroatom or heteroatom-containing radical is preferably bonded directly to the atom on the hydrocarbyl radical at which the oxygen to be scavenged reacts.

3) Transesterification process

In the process as defined in the claims, a melt of a polymer having a polyethylenic backbone and pendant ester moieties is mixed with a transesterifying compound optionally, with a transesterification catalyst, and with an oxygen scavenging-promoting transition-metal salt in an extruder. Reaction conditions are chosen to promote esterification and/or transesterification. Esterification or transesterification preferably occurs using a transesterification catalyst. The resulting polymer can be extruded into any convenient form, such as pellets or film, and may be exposed to actinic radiation.

A melt-blend is preferably made by introducing solid ethylene copolymer (such as ethylene-methyl acrylate copolymer pellets) into an extruder at a temperature and mixing time sufficient to melt the polymer and blend it with the transesterifying compound and any catalysts and transition-metal salts which are optionally introduced into the extruder. A melt may also be formed outside the extruder and fed into the extruder or other mixing equipment used for the esterification and/or transesterification reaction. The appropriate temperature for melt-blending is within the temperature range established by the melting temperature of the polymer (i.e. the temperature at which the polymer is readily deformed; generally, a molten or fluid state) and the temperature at which the polymer starts to degrade. Typically, the temperature is between 180 and 250°C. The blend time, which is the length of time required to mix or blend the polymer, transesterifying

compound, and optional catalyst and transition-metal salt, is chosen to provide good mixing and significant reaction of the transesterifying compound with the polymer. Typically, the blend time is between 5 seconds and 2 minutes in the extruder.

Little or no solvent is used beyond that amount needed to assure good contact of the transesterifying compound with the melt. Alcohols and organic acids typically are liquids at reaction conditions, so no solvent is necessary for these transesterifying compounds. The transesterification reaction can proceed without using a polymer solvent, since the polymer melt and intensive mixing supplied by the mixing equipment provide sufficient contact between the polymer and the transesterifying compound.

The degree of reaction of the ethylene copolymer is preferably based on the amount of transesterifying compound added. Preferably, the transesierifying compound completely reacts with the polymer, so that excess transesterifying compound does not have to be removed in further processing steps.

Esterification or transesterification can be facilitated by use of the transesterification catalysts discussed above. The amount used is that amount which facilitates esterification or transesterification without adversely affecting other polymer properties to a substantial degree. In the case of alkoxy titanates, an alcohol/catalyst molar ratio of 100/3 to 100/0.1 is preferred. Catalysts can be introduced into the mixing equipment separately from the other feed components or mixed with one of the other feed components.

An extruder for this invention is preferably an intermeshing twin-screw extruder. Uniform and intensive mixing such as that supplied by kneading blocks and right-hand elements is particularly preferred. See U.S. Ser. No. 08/144,173, filed Oct. 27, 1993, in this regard.

An extruder may be used in series with one or more extruders or with other processing equipment. When one extruder is used, it is typically divided into at least two zones, a reaction zone and a devolatilization zone. The pressure in the reaction zone is typically selected on the basis of the vapor pressure or boiling point of the transesterifying compound used, and can be at essentially atmospheric pressure for many transesterifying compounds. The reaction zone may also be under slight pressure due to the heat and extruder's action on the polymer. The devolatilization zone is typically under vacuum to assist removing volatile materials from the transesterified polymer.

The process as defined in the claims comprises forming a melt of a polymer capable of esterification and/or transesterification and blending the melt with a hydroxy form of a functional additive under esterification and/or transesterification conditions provides an efficient and economical method of making a polymer having functional side-chains. The hydroxy form of a functional additive has at least one hydroxyl group that can esterify an acid group on the polymer to be esterified (for example, ethylene acrylic acid) or transesterify an ester group on the polymer to be transesterified (for example, ethylene methyl acrylate copolymer).

Compositions of this invention or polymers useful in forming compositions of this invention may contain acrylic acid and/or alkyl acrylate pendant moieties. These can be partially or completely neutralized and/or saponified by methods well-known in the art of making ionomers. One such method is disclosed in U.S. Ser. No. 08/144,173, filed Apr. 5, 1994.

The process of this invention is used to make an oxygen-scavenging polymer, an oxygen scavenging-promoting transition-metal salt is added into the polymer during the esterification or transesterification reaction. Alternatively, the transition metal salt can be incorporated into the polymer component by, for instance, coating pellets of the esterified or transesterified ethylene copolymer with the transition-metal salt and melt-blending the pellets in an extruder, thereby incorporating into the melt blend an amount of the transition-metal salt that is effective to catalyze oxygen scavenging. The method of incorporating the transition-metal salt into the composition is not critical, as long as the transition-metal salt is dispersed throughout the composition prior to use of the composition as an oxygen scavenger. The transition-metal salt can be incorporated into the composition before, during, or after transesterification.

Optionally, the compositions and process of this invention can include exposure of the polymer containing the oxygen scavenging-promoting transition metal to actinic radiation to reduce the induction period, if any, before oxygen scavenging commences. U.S. Patent No. 5,211,875, discloses a method for initiating oxygen scavenging by exposing a film comprising an oxidizable organic compound and a transition metal catalyst to actinic radiation. A composition of the present invention which has a long induction period in the absence of actinic radiation but a short or non-existent induction period after exposure to actinic radiation is particularly preferred. Compositions which are activated by actinic radiation can be stored without special preparation or storage requirements, such as being packaged or kept in a nitrogen environment. They maintain a high capability for scavenging oxygen upon activation with actinic radiation. Thus, oxygen scavenging can be activated when desired.

The radiation used can be actinic, e.g., ultraviolet or visible light having a wavelength of about 200 to 750 nanometers (nm), and preferably having a wavelength of about 200 to 400 nm. When employing this method, it is preferable to expose the composition to at least 0.01 Joules per gram of composition of this invention. A typical amount of exposure is in the range of 0.1 to 100 Joules per gram. Other sources of radiation include ionizing radiation such as gamma, x-rays and corona discharge. The duration of exposure depends on several factors including, but not limited to, the amount and type of photoinitiator present, thickness of the layers to be exposed, amount of any antioxidant present, and the wavelength and intensity of the radiation source. Preferred compositions of the present invention do

not require a photoinitiator.

A) USES FOR COMPOSITIONS OF THIS INVENTION

1) Uses for the specialty polymers

There are many uses for the compositions as defined in the claims. Among other uses, they may be used as a mono-layer film or as a tie layer in a multi-layer film construction for packaging. In certain embodiments, films of the specialty polymers above have substantially increased oxygen permeability, making them useful for packaging fresh-cut produce. The compositions as defined in claim 35 may be used as a heat seal layer or protective layer in packaging, or may be used as an asphalt additive, a hot melt adhesive, a coating, or as wire insulation; they may also be used in injection molding, vacuum molding, or thermoforming applications. Many of the specialty polymers above can be used to modify the physical and performance properties of polymers in which the specialty polymer is blended. Examples of polymers with which the specialty polymers above may be blended include: polyethylene; polypropylene; ethylene-propylene-butadiene terpolymer; ethylene-alkyl acrylate copolymers such as ethylene-methyl acrylate copolymer, ethylene-ethyl acrylate copolymer, and ethylene-butyl acrylate copolymer; ethylene-vinyl acetate copolymer; ethylene-vinyl alcohol copolymer; polyesters such as poly(ethylene terephthalate); nylon; modified polyethylene (ex. maleic anhydride-grafted polyethylene); polybutene; ethylene-propylene copolymer; and other thermoplastic polyolefins.

2) Uses for the oxygen-scavenging compositions of the present invention

Oxygen-scavenging compositions of the present invention are useful in many ways. They can be processed into the form of high surface-area fibers for removing oxygen which contacts the fibers. The compositions can be dispersed as small particles for absorbing oxygen or can be coated onto materials such as metallic foil, polymer film, metalized film, or cardboard to provide, in some embodiments, scavenging properties and/or adhesive properties. The compositions are also useful in making articles such as single or multi-layer rigid thick-walled plastic containers (typically, between 8 and 100 mils in thickness) or in making single or multi-layer flexible films, especially thin films (less than 3 mil, or even as thin as about 0.25 mil). Some of the compositions of the present invention are easily formed into films using well-known means. These films can be used alone or in combination with other films or materials.

The compositions of the present invention may be further combined with one or more polymers, such as thermoplastic polymers which are typically used to form film layers in plastic packaging articles. In the manufacture of certain packaging articles, well-known thermosets can also be used as a polymeric diluent.

Selecting combinations of a diluent and the composition of the present invention depends on the properties desired. Polymers which can be used as the diluent include, but are not limited to, polyethylene, low or very low density polyethylene, ultra-low density polyethylene, linear low density polyethylene, polypropylene, polyvinyl chloride, and ethylene copolymers such as ethylene-vinyl acetate, ethylene-alkyl acrylates or methacrylates, ethylene-acrylic acid or methacrylic acid, and ethylene-arylic or metharylic acid ionomers. In rigid packaging applications, polystyrene is used, and in rigid articles such as beverage containers, polyethylene terephthalate (PET), is often used. See U.S. Patent No. 5,021,515. Blends of different diluents may also be used. However, as indicated above, the selection of the polymeric diluent largely depends on the article to be manufactured and the end use. Such selection factors are well known in the art.

If a diluent polymer such as a thermoplastic is employed, it should further be selected according to its compatibility with the composition of the present invention. In some instances, the clarity, cleanliness, effectiveness as an oxygen scavenger, barrier properties, mechanical properties and/or texture of the article can be adversely affected by a blend containing a polymer which is incompatible with the composition of the present invention.

A blend of a composition of the present invention with a compatible polymer can be made by dry blending or by melt-blending the polymers together at a temperature in the approximate range of 50°C to 250°C. Alternative methods of blending include the use of a solvent followed by evaporation. When making film layers or articles from oxygen-scavenging compositions, extrusion or coextrusion, solvent casting, injection molding, stretch blow molding, orientation, thermoforming, extrusion coating, coating and curing, lamination or combinations thereof would typically follow the blending.

The amounts of transition-metal salt, polymer comprising a polyethylenic backbone having pendant moieties comprising allylic, and/or cyclic ether radicals, and optional polymeric diluents and additives vary depending on the article to be manufactured and its end use. These amounts also depend on the desired scavenging capacity, the desired scavenging rate, the induction period of the oxygen scavenger, and the particular materials selected.

The compositions of the present invention have various induction periods before the compositions become effective oxygen scavengers. Thus, the particular composition chosen for a given use will depend in part on the length of time that the composition is to be stored prior to scavenging oxygen.

Layers comprising the composition of the present invention may be in several forms, They may be in the form

of stock films, including "oriented'' or "heat shrinkable" films, which may ultimately be processed as bags, etc., or in the form of stretch-wrap films. The layers may also be in the form of sheet inserts to be placed in a packaging cavity. In rigid articles such as beverage containers, thermoformed trays or cups, the layer may be within the container's walls. Even further, the layer may also be in the form of a liner placed with or in the container's lid or cap. The layer may even be coated or laminated onto any one of the articles mentioned above.

Many of the oxygen-scavenging compositions, have sufficient tie-strength to be useful additionally as a tie-layer in a multi-layer structure. Thus, separate tie layers may not be necessary for binding the composition of the present invention into a multi-layer film. Also, the oxygen-scavenging composition can have sufficient hot-tack properties that a layer made from the composition of the present invention will function additionally as the heat-seal layer.

In multilayered articles, the scavenging layer comprising the composition of the present invention may be included with layers such as, but not necessarily limited to, "oxygen barriers", i.e., layers of material having an oxygen transmission rate equal to or less than 100 cubic centimeters-mil per square meter (cc-mil/$m^2$) per day per atmosphere pressure at room temperature, i.e., about 25°C. Typical oxygen barriers comprise poly(ethylene vinyl alcohol), polyacrylonitrile, polyvinyl chloride, poly(vinylidene dichloride), polyethylene terephthalate, silica, and polyamides. Metal foil layers can also be employed.

The additional layers may also include one or more layers which are permeable to oxygen. In one preferred embodiment, especially for flexible packaging for food, the layers include, in order starting from the outside of the package to the innermost layer of the package, (i) a structural layer to provide mechanical strength and to act as a moisture barrier (e.g. high-density polyethylene), (ii) an oxygen barrier layer, (iii) a layer comprising an oxygen-scavenging composition of the present invention, and optionally, (iv) a functional layer such as EVA. Control of the oxygen barrier property of (ii) allows a means to regulate the scavenging life of the package by limiting the rate of oxygen entry to the scavenging component (iii), and thus limiting the rate of consumption of scavenging capacity. The functional layer in a multilayered composition is a layer which is added to perform functions which the adjacent layer cannot perform as well as the functional layer. The functional layer can provide a barrier to stop or slow migration of compounds contained within a composition of the present invention into the package interior. These migrating compounds include additives or by-products of oxygen scavenging. The functional layer may improve the heat-sealability, clarity and/or resistance to blocking of the multi-layer film. Control of the oxygen permeability of the functional layer also allows a means to set an upper limit on the rate of oxygen scavenging for the overall structure independently of the composition of the scavenging component (iii). This can serve the purpose of extending the handling lifetime of films in the presence of air prior to sealing the package.

The multilayered articles can be prepared using coextrusion, coating and/or lamination. In addition to oxygen barrier and oxygen permeable layers, further layers such as tie-layers which function to bind the other layers into one film and adhesive layers which make the overall film adhesive to other surfaces may be adjacent to any of the layers listed above. Compositions suitable for tie-layers or adhesive layers include those well known in the art, such as maleic anhydride functionalized polyolefins.

To determine the oxygen scavenging capabilities of a composition, the rate of oxygen scavenging can be calculated by measuring the time elapsed before the article depletes a certain amount of oxygen from a sealed container. For instance, a film comprising the scavenging component can be placed in an air-tight, sealed container of a certain oxygen containing atmosphere, e.g., air which typically contains 20.9% oxygen by volume. Then, over a period of time, samples of the atmosphere inside the container are removed to determine the percentage of oxygen remaining. The scavenging rates of the composition and layers of the present invention will change with changing temperature and atmospheric conditions.

When an active oxygen barrier is prepared, the scavenging rate is equal to or greater than 1 cc oxygen per gram of composition of the present invention per day in air at 25°C and at 1 atmosphere pressure, thus making them suitable for scavenging oxygen from within a package, as well as suitable for active oxygen barrier applications. Many compositions are even capable of more preferable rates equal to or greater than 5.0 cc $O_2$ per gram per day.

Generally, film layers suitable for use as an active oxygen barrier can have an oxygen transmission rate as high as 10 cc oxygen per square meter per mil per day when measured in air at 25°C and 1 atmosphere pressure. Preferably, a layer of this invention has an oxygen transmission rate less than about 1 cc oxygen per square meter per mil per day, and more preferably has an oxygen transmission rate less than about 0.2 cc oxygen per square meter per mil per day under the same conditions, thus making it suitable for active oxygen barrier applications as well as for scavenging oxygen from within a package.

In an active oxygen barrier application, it is preferable that the combination of oxygen barriers and any oxygen scavenging activity create an overall oxygen transmission rate of less than about 1.0 cubic centimeter-mil per square meter per day per atmosphere pressure at 25°C. Another definition of acceptable oxygen scavenging is derived from testing actual packages. In actual use, the scavenging rate requirement will largely depend on the internal atmosphere of the package, the contents of the package and the temperature at which it is stored. In actual use, it has been found that the scavenging rate of the oxygen scavenging article or package should be sufficient to establish an internal oxygen level of less than 0.1% in less than about four weeks.

In a packaging article made according to this invention, the scavenging rate will depend primarily on the amount and nature of the composition of the present invention in the article, and secondarily on the amount and nature of other additives (e.g., diluent polymer, antioxidant, etc.) which are present in the scavenging component, as well as the overall manner in which the package is fabricated, e.g., surface area/volume ratio.

The oxygen scavenging capacity of an article comprising the invention can be measured by determining the amount of oxygen consumed until the article becomes ineffective as a scavenger. The scavenging capacity of the package will depend primarily on the amount and nature of the scavenging moieties present in the article, as discussed above.

In actual use, the oxygen scavenging capacity requirement of the article will largely depend on three parameters of each application:

1. the quantity of oxygen initially present in the package,
2. the rate of oxygen entry into the package in the absence of the scavenging property, and
3. the intended shelf life for the package.

The scavenging capacity of the composition can be as low as 1 cc oxygen per gram, but is preferably at least 10 cc oxygen per gram, and more preferably at least 50 cc oxygen per gram. When such compositions are in a layer, the layer will preferably have an oxygen capacity of at least 250 cc oxygen per square meter per mil thickness and more preferably at least 500 cc oxygen per square meter per mil thickness.

Other factors may also affect oxygen scavenging and should be considered when selecting compositions. These factors include but are not limited to temperature, relative humidity, and the atmospheric environment in the package.

As illustrated in the Examples, some embodiments of the invention go through an "induction period" before they exhibit oxygen scavenging. It has been found that this induction period can be shortened substantially by exposing the composition to radiation. To initiate oxygen scavenging in an oxygen scavenger is defined herein as facilitating scavenging such that the induction period of oxygen scavenging is significantly reduced or eliminated. The induction period is the period of time before the scavenging composition exhibits useful scavenging properties. Further, initiation of oxygen scavenging may also apply to compositions which have an indeterminate induction period in the absence of radiation.

While the exact manner in which oxygen scavenging is initiated is not known, it is postulated, without limiting the invention to any specific theory, that one or more of the following occurs when the oxygen scavenger is exposed to radiation:

a. substantial depletion of any antioxidant(s), if present, thus allowing oxidation to proceed;

b. activation of the transition metal catalyst through a change in the metal's oxidation state and/or its configuration of ligands, thus increasing its effect on scavenging; or

c. a substantial increase in free radical and/or peroxide species present in the system, despite the inhibiting effect of any antioxidant(s) if present or remaining.

When using oxygen scavenging layers or articles, exposure to radiation can be during or after the layer or article is prepared. If the resulting layer or article is to be used to package an oxygen sensitive product, exposure can be prior to, during, or after packaging. For best uniformity of radiation, exposure should occur when the layer or article is a flat sheet.

A composition of the present invention provides substantial advantages in packaging food products. An article or wrap for containing food can be made from the composition, and oxygen scavenging capabilities of the composition can be initiated by exposing the article or film to actinic radiation to reduce the induction period prior to or even after food is enclosed within the composition of the present invention. This provides the ability to supply food having the freshest flavor. Also, initiation of the oxygen scavenging properties at the time of packaging food permits the greatest shelf-life, since the full oxygen scavenging capacity of the article or film is utilized in keeping oxygen out of the food.

The compositions and methods are illustrated by the following examples, which are not intended to limit the invention in any way.

<u>Reactive Extrusion</u>

A Werner Pfleiderer ZSK-30 twin-screw extruder was used. Ethylene-methyl acrylate copolymer was fed into the extruder and melted, and the reactant(s) and catalyst(s) were added to the extruder in a subsequent reaction zone.

Although the following examples utilized ethylene-methyl acrylate copolymer, the method described herein is not limited to use of only ethylene-methyl acrylate copolymer.

Two vent ports on the extruder reduced the flooding which often occurred in a screw with only one vent port. The first vent port downstream of the point where reactant(s) and catalyst(s) are added was open to the atmosphere to allow reaction by-products (in the examples, methanol) to escape. The by-products may also be removed under slight vacuum. The second vent port, downstream of the first, was under vacuum to remove any residual reactants (such as benzyl alcohol), which normally have higher boiling points than the by-products. Additional down-stream vent ports can be used, if desired.

The temperature in the extruder was selected primarily to provide a uniform mixture of melted polymer, reactant (s) and catalyst(s) without degrading the polymer. However, the temperature was also selected to produce the greatest difference in vapor pressure between the by-products and the reactants (where the by-products have a lower boiling-point than the reactants). Normally, the temperature will be at or slightly below the boiling point of the reactants.

Example 1

Reactive extrusion synthesis of assorted specialty polymers

Ethylene-methyl acrylate copolymer having 24 wt. % MA and MI of 2 g/10 min, is transesterified individually with the compounds indicated in Table 1 and in the presence of tetraethyl titanate catalyst in an extruder by the reactive extrusion method mentioned above. The ethylene-methyl acrylate polymer was fed into the extruder at a feed rate of 3 kg/hr with a barrel temperature of about 205-210°C. The alcohol and tetraethyl titanate catalysts were fed into the first mixing zones at rates of 1.5 kg/hr and 15 g/hr, respectively. The resulting polymers contain ester groups wherein the percentage of methyl moieties of the methyl acrylate indicated as converted in Table 1 are replaced with the hydrocarbyl group of the alcohol.

Table 1

| Polymer # | Transesterifying compound |
|---|---|
| J | 3-methyl-3-butenyl alcohol |
| K | trimethylpropane diallyl ether alcohol |
| L | farnesol |
| M | tetrahydropyran-2-methyl alcohol |
| N | 1,4-dioxane-2-methyl alcohol |

Example 2

Oxygen scavengers from selected specialty polymers

1000 ppm cobalt as cobalt neodecanoate is combined individually with pellets of polymers J-N and uniformly mixed into pellets of the polymers. A film is made of each of the polymers.

Example 3

Reactive extrusion synthesis of assorted specialty polymers

Ethylene-methyl acrylate copolymer having 24 wt.% MA and MI of 2 g/10 min. was transesterified individually with the compounds listed in Table 4 and in the presence of tetraisopropyl titanate catalyst in an extruder substantially by the reactive extrusion method mentioned above. The resulting polymers contained ester groups wherein the percentage of methyl moieties of the methyl acrylate indicated as converted in Table 2 were replaced with the hydrocarbyl group of the alcohol. All of the alcohols listed were obtained from Aldrich, with the exception that hydroxypolybutadiene was obtained from Nisso.

Table 2

| Polymer # | Transesterifying compound | % conversion of methyl acrylate groups |
|---|---|---|
| O | Nopol | > 73% (1 mole Nopol used per 1 mole EMA copolymer) |
| P | Nopol | 14% |

(continued)

| Polymer # | Transesterifying compound | % conversion of methyl acrylate groups |
|---|---|---|
| Q | Nopol | 48% |
| R | Ocenol 110/130 | 10% |
| S | Tetrahydrofurfuryl alcohol | - |
| T | Tetrahydrofurfuryl alcohol | 24% |
| U | Tetrahydrofurfuryl alcohol | 43% |
| EMA = ethylene methyl acrylate copolymer<br>THF = tetrahydrofuran | | |

Example 4

Solution synthesis of assorted specialty polymers

Ethylene-methyl acrylate copolymer having 24 wt.% MA and MI of 2 g/10 min. was transesterified individually with the compounds listed in Table 5 and in the presence of tetraisopropyl titanate catalyst in solution. The resulting polymers contained ester groups wherein the percentage of methyl moieties of the methyl acrylate indicated as converted in Table 2 were replaced with the hydrocarbyl group of the alcohol. All of the alcohols listed were obtained from Aldrich, with the exception that hydroxypolybutadiene was obtained from Nisso and Ocenol (a mixture of oleo alcohol and linoleo alcohol) was obtained from Henkel. 110/130 and 90/95 indicate the iodine number of the Ocenol.

Table 3

| Polymer # | Transesterifying compound | % conversion of methyl acrylate groups |
|---|---|---|
| Y COMPARATIVE | Phenethyl alcohol | 81% |
| Z | Nerol/geraniol | 72% |
| AA | Ocenol 110/130 | 56% |
| AB | Ocenol 90/95 | 61% |
| AC | Dihydroxypolybutadiene | -5- |
| AD | Cinnamyl alcohol | 69% |
| AH | trimethylpropane diallyl ether alcohol | 21% |
| 5. 50 wt. parts dihydroxypolybutadiene, 100 wt. parts of EMA copolymer | | |

Example 5

Oxygen scavengers from selected specialty polymers

1000 ppm Co from cobalt neodecanoate (unless otherwise indicated) was uniformly mixed into pellets of selected polymers of Tables 2 and 3 above, and mono-layer film was extruded. A Randcastle Microtruder was used to extrude mono-layer films of about 5 mil thickness of polymers with cobalt. The die temperature, feed block, and adapter were set at 420°F, and the feeder RPM was set at 143. Each film was irradiated for 20 minutes with a Blak-Ray UV lamp (254 nm, 5 $mW/cm^2$) and was placed in a 1000 cc bottle containing atmospheric air. The bottle was maintained at room temperature (unless otherwise indicated), and the amount of oxygen scavenged was determined periodically and divided by the weight of the polymer sample in the bottle. The oxygen scavenging results are listed in Tables 4-14.

Table 4 - COMPARATIVE

| Oxygen scavenging results using polymer Y | |
|---|---|
| Time, days | $O_2$ uptake, ml/g |
| 0.0 | -- |
| 1.0 | 3.30 |
| 2.0 | 3.30 |

(continued)

| Oxygen scavenging results using polymer Y | |
|---|---|
| Time, days | $O_2$ uptake, ml/g |
| 3.0 | 4.29 |
| 6.0 | 8.23 |
| 7.0 | 9.71 |
| 8.0 | 12.16 |
| 14.0 | 27.30 |
| 21.0 | 46.29 |
| 27.0 | 62.95 |
| 31.0 | 73.11 |
| 38.0 | 82.95 |

Table 5

| Oxygen scavenging results using polymer O | | |
|---|---|---|
| Time, days | $O_2$ uptake, ml/g using Co neodecanoate | $O_2$ uptake, ml/g using Co benzoate |
| 0.0 | -- | -- |
| 0.2 | 3.49 | 2.00 |
| 1.0 | 14.27 | 1.79 |
| 2.0 | 37.54 | 3.58 |
| 6.0 | 64.55 | 51.78 |
| 9.0 | 71.96 | 65.85 |
| 13.0 | 75.59 | 70.97 |

Table 6

| Oxygen scavenging results at room temperature using polymers P and Q | | |
|---|---|---|
| Time, days | $O_2$ uptake, ml/g, for polymer P | $O_2$ uptake, ml/g, for polymer Q |
| 0.0 | -- | -- |
| 1.0 | 13.25 | 30.66 |
| 2.0 | 20.69 | 48.52 |
| 3.0 | 26.62 | 56.87 |
| 6.0 | 35.50 | 68.71 |
| 8.0 | 39.43 | 73.82 |
| 10.0 | 40.90 | 76.61 |
| 15.0 | 46.27 | 82.81 |
| 20.0 | 48.71 | 85.10 |
| 24.0 | 50.65 | 86.80 |

Table 7

| Oxygen scavenging results at 5°C using polymers P and Q | | |
|---|---|---|
| Time, days | $O_2$ uptake, ml/g, for polymer P | $O_2$ uptake, ml/g, for polymer Q |
| 0.0 | -- | -- |
| 1.0 | 2.80 | 7.28 |
| 2.0 | 6.27 | 17.69 |
| 3.0 | 9.24 | 25.11 |

(continued)

| Oxygen scavenging results at 5°C using polymers P and Q | | |
|---|---|---|
| Time, days | $O_2$ uptake, ml/g, for polymer P | $O_2$ uptake, ml/g, for polymer Q |
| 4.0 | 13.18 | 33.00 |
| 7.0 | 22.03 | 45.78 |
| 8.0 | 23.50 | 48.23 |
| 9.0 | 26.43 | 50.67 |
| 14.0 | 31.79 | 57.68 |
| 18.0 | 33.73 | 60.74 |

Table 8

| Oxygen scavenging results at room T using polymer Z | |
|---|---|
| Time, days | $O_2$ uptake, ml/g |
| 0.0 | -- |
| 0.3 | 8.27 |
| 1.0 | 27.12 |
| 2.0 | 53.33 |
| 5.0 | 92.52 |
| 6.0 | 99.1 (essentially all $O_2$ removed from 1000 cc headspace - bottle was refilled with air) |
| 7.0 | 15.92 |
| 8.0 | 18.90 |
| 9.0 | 23.35 |
| 12.0 | 32.22 |
| 13.0 | 34.68 |
| 14.0 | 37.62 |
| 16.0 | 39.57 |
| 19.0 | 42.98 |
| 23.0 | 46.38 |
| 30.0 | 50.25 |
| 35.0 | 49.77 |
| 40.0 | 49.77 |
| NOTE: polymer extruded as gels in a lace matrix, with approximately 50% void space | |

Table 9

| Oxygen scavenging results at 5°C using polymer Z | |
|---|---|
| Time, days | $O_2$ uptake, ml/g |
| 0.0 | -- |
| 1.2 | 8.77 |
| 2.0 | 19.68 |
| 3.0 | 26.11 |
| 4.0 | 35.97 |
| 7.0 | 58.19 |
| 8.0 | 62.80 |
| 9.0 | 67.33 |
| 14.0 | 81.66 |
| 18.0 | 90.07 |
| 25.0 | 96.67 |

(continued)

| Oxygen scavenging results at 5°C using polymer Z | |
|---|---|
| Time, days | $O_2$ uptake, ml/g |
| 30.0 | 100.65 |
| 35.0 | 102.57 |
| NOTE: polymer extruded as gels in a lace matrix, with approximately 50% void space | |

Table 10

| Oxygen scavenging results using polymers AA and AB | | |
|---|---|---|
| Time, days | $O_2$ uptake, ml/g, polymer AA | $O_2$ uptake, ml/g, polymer AB |
| 0.0 | -- | -- |
| 1.0 | 22.20 | 25.19 |
| 2.0 | 33.12 | 40.56 |
| 5.0 | 51.91 | -- |
| 6.0 | 56.89 | -- |
| 7.0 | 61.26 | 76.81 |
| 9.0 | 68.22 | -- |
| 12.0 | 75.40 | -- |
| 16.0 | 81.63 | -- |
| 19.0 | 84.69 | -- |
| 23.0 | 87.84 | -- |
| 28.0 | 90.30 | -- |
| 33.0 | 91.84 | -- |
| NOTE: lines in tables in place of values indicate that samples were not taken or were not analyzed | | |

Table 11

| Oxygen scavenging results using polymer AC | |
|---|---|
| Time, days | $O_2$ uptake, ml/g |
| 0.0 | -- |
| 1.0 | 7.78 |
| 2.0 | 14.72 |
| 5.0 | 26.59 |
| 6.0 | 29.05 |
| 7.0 | 32.98 |
| 9.0 | 35.93 |
| 12.0 | 40.81 |
| 16.0 | 46.17 |
| 19.0 | 49.08 |
| 23.0 | 52.95 |
| 28.0 | 56.76 |
| 33.0 | 59.75 |

Table 12

| Oxygen scavenging results using polymer AD | |
|---|---|
| Time, days | $O_2$ uptake, ml/g |
| 0.0 | -- |
| 1.0 | 3.30 |
| 4.0 | 4.79 |
| 5.0 | 6.27 |
| 6.0 | 11.20 |
| 8.0 | 28.40 |
| 11.0 | 41.63 |
| 12.0 | 44.56 |
| 13.0 | 48.46 |
| 14.0 | 50.40 |
| 18.0 | 57.13 |
| 21.0 | 60.84 |
| 27.0 | 66.28 |

Table 13

| Oxygen scavenging results using polymer S | |
|---|---|
| Tune, days | $O_2$ uptake, ml/g |
| 0.0 | -- |
| 0.2 | 9.98 |
| 1.0 | 37.24 |
| 2.0 | 49.08 |
| 3.0 | 55.41 |
| 6.0 | 68.58 |
| 7.0 | 71.65 |
| 14.0 | 82.12 |
| 17.0 | 84.67 |
| 20.0 | 86.53 |
| 23.0 | 86.99 |
| 29.0 | 87.96 |

Table 14

| Oxygen scavenging results using polymers T and U | | |
|---|---|---|
| Time days | $O_2$ uptake, ml/g, polymer T | $O_2$ uptake, ml/g, polymer U |
| 0.0 | -- | -- |
| 0.2 | -- | 2.99 |
| 1.0 | 2.80 | 4.79 |
| 2.0 | 4.29 | 10.1 |
| 3.0 | -- | 21.9 |
| 5.0 | 14.18 | -- |
| 6.0 | 18.12 | 45.7 |
| 7.0 | 22.55 | -- |
| 8.0 | -- | 56.3 |
| 9.0 | 28.43 | -- |
| 10.0 | -- | 65.1 |

(continued)

| Oxygen scavenging results using polymers T and U | | |
|---|---|---|
| Time days | $O_2$ uptake, ml/g, polymer T | $O_2$ uptake, ml/g, polymer U |
| 12.0 | 35.75 | -- |
| 13.0 | -- | 73.7 |
| 16.0 | 45.49 | -- |
| 17.0 | -- | 82.3 |
| 21.0 | -- | 87.0 |
| 27.0 | -- | 93.1 |

Example 6

Solution transesterification using oleyl alcohol

Ethylene-methyl acrylate copolymer having 24% MA and 2 MI was transesterified using oleyl alcohol substantially by the method of Ex. 3. 34% of the methyl acrylate groups were converted to oleyl acrylate groups. 1000 ppm cobalt as cobalt neodecanoate was uniformly mixed into the transesterified polymer, and a film of the polymer was made substantially as follows : 1000 parts of polymer pellets were tumble mixed with 8.3 parts of cobalt neodecanoate (which contains 1 part cobalt) in 20 parts hexane. The performance of this composition in scavenging oxygen is summarized in Tables 17 and 18.

Table 15

| Time, days | $O_2$ uptake, ml/g, room temperature |
|---|---|
| 0.0 | -- |
| 0.2 | 3.30 |
| 1.0 | 8.26 |
| 2.0 | 15.68 |
| 5.0 | 33.42 |
| 7.0 | 42.76 |
| 9.0 | 51.58 |
| 12.0 | 60.82 |
| 16.0 | 68.12 |
| 19.0 | 72.00 |
| 23.0 | 77.04 |

Table 16

| Time, days | $O_2$ uptake, ml/g, 23°C | $O_2$ uptake, ml/g, 6°C |
|---|---|---|
| 0.0 | -- | -- |
| 1.0 | 9.27 | 4.79 |
| 2.0 | 15.72 | 8.26 |
| 3.0 | 21.16 | 11.72 |
| 6.0 | 37.43 | 15.67 |
| 7.0 | 42.34 | 17.14 |
| 8.0 | 44.79 | 18.61 |
| 9.0 | 49.19 | 20.08 |
| 10.0 | 54.15 | 22.03 |
| 13.0 | 61.97 | 27.85 |
| 14.0 | 63.66 | 29.30 |
| 15.0 | 66.61 | 31.23 |
| 16.0 | 68.53 | 32.68 |

(continued)

| Time, days | $O_2$ uptake, ml/g, 23°C | $O_2$ uptake, ml/g, 6°C |
|---|---|---|
| 20.0 | 73.28 | 40.35 |
| 23.0 | 76.19 | 45.61 |
| 29.0 | 79.48 | 50.85 |

**Claims**

1. A composition comprising a transition-metal salt and a compound having an ethylenic or polyethylenic backbone, wherein the compound has pendant or terminal moieties which contain a carbon atom that forms a resonance-stabilized free radical under oxygen-scavenging conditions, wherein the pendant or terminal moieties comprise allylic or cyclic ether moieties having at least one alpha hydrogen, the composition having an oxygen scavenging rate equal to or greater than 1 cc oxygen per gram per day in air at 25°C and at 1 atm pressure.

2. The composition of claim 1 wherein the free radical is stabilized under oxygen scavenging conditions by an adjacent group containing p electrons that are unbonded or that are pi-bonded to other atoms in the group.

3. The composition of claim 1 wherein the composition is effective to scavenge at least 1 cc of oxygen per gram of said composition.

4. The composition of Claim 1 further comprising a heteroatom-containing radical directly bonded to the carbon atom having an allylic hydrogen or the carbon atom bonded to the oxygen atom of an ether radical.

5. The composition of Claim 4 wherein said radicals comprise radicals substituted with at least one radical selected from the group consisting of hydrogen, alkyl radicals containing from 1 to 18 carbon atoms, alkoxy radicals having from 1 to 16 carbon atoms, amine radicals having from 1 to 6 carbon atoms, ester and amide radicals of acids having from 1 to 16 carbon atoms, aryl radicals and substituted aryl radicals having 6 to 24 carbon atoms, and aryl ether radicals and substituted aryl ether radicals having from 6 to 24 carbon atoms.

6. The composition of Claim 4 wherein the heteroatom-containing radical is selected from the group consisting of ester, amide, and imide radicals.

7. The composition of Claim 6 wherein the ester, amide, and imide radicals are directly bonded to the ethylenic or polyethylenic backbone.

8. The composition of Claim 7 wherein the ester radical is directly bonded to the ethylenic or polyethylenic backbone through the carbon atom of the ester radical.

9. The composition of Claim 7 wherein the amide radical is directly bonded to the ethylenic or polyethylenic backbone through the carbon atom of the amide radical.

10. The composition of Claim 7 wherein the heteroatom-containing radical is selected from the group consisting of ester and amide radicals.

11. The composition of Claim 10 wherein said component comprises a polymer having an ethylenic or polyethylenic backbone and having between about 1 and about 17.9 mole percent poly(1,2-butadienyl) ester, 6,6-dimethylbicyclo [3.1.1]hept-2-ene-ethyl ester, 3-methyl-3-butenyl ester, 2,6-dimethyloct-2,6-dienyl ester, cinnamyl ester, trimethylpropane diallyl ether ester, 2,6,10-trimethyldodec-2,6,10-trienyl ester, oleyl ester, and/or linoleyl ester radicals directly bonded to the ethylenic or polyethylenic backbone.

12. The composition of Claim 11 wherein the composition contains between 20 and 200 moles of said radicals per mole of transition-metal element.

13. The composition of Claim 12 wherein the transition-metal salt comprises cobalt neodecanoate and/or cobalt benzoate.

**14.** The composition of Claim 11 wherein the polymer contains sodium, zinc, potassium, or ammonium counter-ions.

**15.** The composition of Claim 11 wherein said polymer further comprises said ethylenic or polyethylenic backbone and pendant carboxy radicals.

**16.** The composition of Claim 11 wherein said polymer further comprises said ethylenic or polyethylenic backbone and pendant alkyl ester radicals.

**17.** The composition of Claim 16 wherein the pendant alkyl ester radicals comprise methyl ester radicals.

**18.** The composition of Claim 17 wherein the composition contains between about 0.3 and about 17.2 mole percent methyl ester radicals.

**19.** The composition of Claim 17 wherein the composition contains between about 0.3 and about 8.9 mole percent methyl ester radicals

**20.** The composition of Claim 4 wherein the composition contains between 10 and 2000 moles of said radicals per mole of transition-metal element.

**21.** The composition of Claim 4 wherein the composition contains between 20 and 200 moles of said radicals per mole of transition-metal element.

**22.** The composition of Claim 21 wherein the transition-metal salt comprises a cobalt salt.

**23.** The composition of Claim 21 wherein the transition-metal salt comprises a cobalt neodecanoate and/or cobalt benzoate.

**24.** The composition of Claim 3 wherein the transition-metal salt and said radicals are present in an amount which is effective to scavenge oxygen.

**25.** A polymer composition prepared by reacting an ethylene alkyl acrylate copolymer with a transesterifying compound selected from the group consisting of allylic alcohol and cyclic ether alcohol, having at least one alpha hydrogen said composition having alkyl ester and allylic or ether ester radicals, the composition comprising a transition-metal salt and having an oxygen scavenging rate equal to or greater than 1 cc oxygen per gram per day in air at 25°C and at 1 atm pressure.

**26.** The composition of Claim 25 having more than 5 mole percent allylic ester and/or ether ester radicals.

**27.** The composition of Claim 25 wherein the ethylene alkyl acrylate copolymer has a melt-point temperature at least about 6 deg F greater than a reference ethylene-alkyl acrylate copolymer, where the reference copolymer is made in a multi-zone autoclave reactor and the ratio of alkyl acrylate to ethylene in a reaction zone when making the reference copolymer is about equal to the overall ethylene to alkyl acrylate ratio fed to the multi-zone autoclave reactor.

**28.** A composition comprising a compound having an ethylenic or polyethylenic backbone and pendant moieties containing allylic hydrogen, the composition comprising a transition-metal salt and having an oxygen scavenging rate equal to or greater than 1 cc oxygen per gram per day in air at 25°C and at 1 atm pressure.

**29.** The composition of claim 28 wherein the moieties containing allylic hydrogen are cyclic.

**30.** A composition comprising a compound having an ethylenic or polyethylenic backbone and pendant cyclic ether moieties having at least one alpha hydrogen selected from tetrahydrofurfuryl and 2-methyltetrahydropyranyl radicals.

**31.** The composition of claims 28 or 30 wherein the composition is a copolymer of ethylene and a comonomer selected from the group consisting of poly (1,2-butadienyl) acrylate, 6, 6-dimethylbicyclo [3.1.1] hept-2-ene-ethyl acrylate, 3-methyl-3-butenyl acrylate, 2,6-dimethyloct-2,6-dienyl acrylate, cinnamyl acrylate, trimethylpropane diallyl ether acrylate, 2,6,10-trimethyldodec-2,6,10-trienyl acrylate, and oleyl and/or linoleyl acrylate.

**32.** The composition of claim 30 wherein the ether moieties are monocyclic and contain from two to seven carbon atoms.

**33.** The composition of claim 28 or 30 wherein at least a portion of the pendant moieties are cyclic.

**34.** The composition of claim 30 wherein the composition is a copolymer of ethylene and a comonomer selected from the group consisting of tetrahydrofurfuryl acrylate, and 2-methyltetrahydropyran acrylate.

**35.** A composition comprising a polyethylenic backbone and at least one pendant radical selected from the group consisting of oxazoline; $C_1$-$C_{18}$ esters that have at least one epoxy radical-substituted on a carbon atom; polyamide esters; and the following esters and amides:

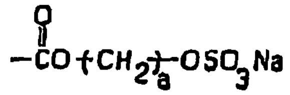

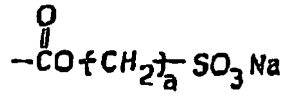

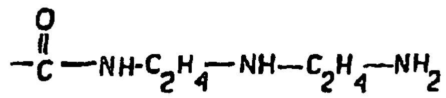

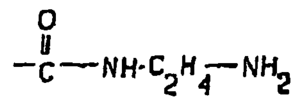

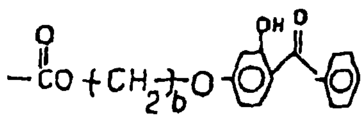

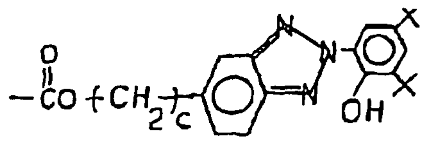

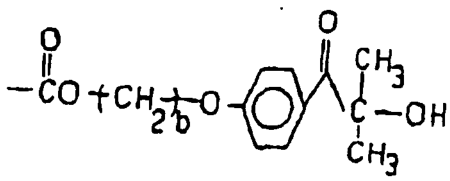

where a is an integer between 1 and 18, inclusive, b is an integer between 1 and 12, inclusive, and c is an integer between 0 and 12, inclusive.

**36.** A film comprising the composition of claim 3.

**37.** A layer in a film or article comprising the composition of claim 3.

**38.** A multi-layer composition comprising:

A) a first layer comprising an oxygen barrier layer; and
B) a second layer comprising the composition of Claim 24.

**39.** The multi-layer composition of claim 38 further comprising a third layer comprising a functional layer.

**40.** The multi-layer composition of claim 38 further comprising a third layer comprising a structural layer.

**41.** The multi-layer composition of claim 40 further comprising a fourth layer comprising a functional layer.

**42.** A rigid thick-walled composition comprising the composition of claim 3.

**43.** A single or multi-layer film, rigid thick-walled composition, or article comprising an oxygen-scavenging composition according to claim 3.

**44.** A multi-layer film, rigid thick-walled composition, or article according to claim 43, comprising an oxygen-scavenging composition according to claim 3.

**45.** A multi-layer film, rigid thick-walled composition, or article of claim 44 wherein at least one layer comprises an oxygen barrier layer.

**46.** A multi-layer film, rigid thick-walled composition, or article of claim 45 wherein at least one layer comprises a functional layer.

**47.** A multi-layer film, rigid thick-walled composition, or article of claim 45 or 46 wherein at least one layer comprises a structural layer.

**48.** A process comprising:

A. forming a melt of a polymer having polyethylenic backbone and pendant ester and/or acid moieties; and
B. contacting the melt with a transesterifying compound wherein the transesterifying compound comprises an allylic or cyclic ether moiety having at least one alpha hydrogen, in an extruder under transesterification conditions, where the polymer undergoes esterification and/or transesterification but not alcoholysis, and the polymer after esterification or transesterification has a polyethylenic backbone and pendant ester and/or acid moieties, and combining the polymer with a transition-metal salt, thus obtaining a composition having an oxygen scavenging rate equal to or greater than 1 cc oxygen per gram per day in air at 25°C and at 1 atm pressure.

**49.** The process of claim 48 further comprising contacting the melt with a transesterification catalyst.

**50.** The process of claim 48 wherein the reaction occurs essentially at atmospheric pressure.

**51.** The process of claim 48 wherein the polymer comprises ethylene alkyl acrylate copolymer, ethylene acrylic acid copolymer, or ethylene alkyl acrylate copolymer grafted with maleic anhydride.

**52.** The process of claim 51 the polymer comprises ethylene methyl acrylate copolymer.

**53.** The process of claim 51 or 52 wherein the transesterifying compound comprises a compound selected from the group consisting of hydroxypoly(1,2-butadiene), 6,6-dimethylbicyclo[3.1.1] hept-2-ene-ethanol, 3-methyl-3-butenyl alcohol, 2,6-dimethyloct-2,6-dienyl alcohol, cinnamyl alcohol, trimethylpropane diallyl ether alcohol, 2,6,10-trimethyldodec-2,6,10-trienyl alcohol, ocenol, oleo and/or linoleo alcohol.

**54.** The process of claim 48 wherein the transition metal salt comprises a cobalt metal salt.

**55.** The process of claim 53 further comprising irradiating the transesterified polymer with actinic radiation.

**56.** A method comprising making a polymer having functional side-chains comprising forming a melt of a polymer having an ethylenic or polyethylenic backbone and capable of esterification and/or transesterification and blending the melt with a hydroxy form of a functional additive comprising an allylic or cyclic ether moiety having at least one alpha hydrogen under esterification and/or transesterification conditions, and combining the polymer with a transition-metal salt, thus obtaining a composition having an oxygen scavenging rate equal to or greater than 1 cc oxygen per gram per day in air at 25°C and at 1 atm pressure.

**57.** The composition produced by the process of any of claims 51 to 56.

**Patentansprüche**

**1.** Zusammensetzung, umfassend ein Übergangsmetallsalz und eine Verbindung mit einem Ethylen- oder Polyethylengerüst, wobei die Verbindung seitenständige oder endständige Einheiten aufweist, die ein Kohlenstoffatom enthalten, das unter Sauerstoffaufnahmebedingungen ein mesomeriestabilisiertes freies Radikal bildet, und die seitenständigen oder endständigen Einheiten Allyl- oder cyclische Ethereinheiten mit mindestens einem alpha-Wasserstoffatom umfassen, wobei die Zusammensetzung eine Sauerstoffaufnahmerate größer gleich 1 $cm^3$ Sauerstoff pro g und Tag an der Luft bei 25°C und 1 atm Druck aufweist.

**2.** Zusammensetzung nach Anspruch 1, wobei das freie Radikal unter Sauerstoffaufnahmebedingungen durch eine Nachbargruppe mit p-Elektronen stabilisiert wird, die keine Bindung oder eine $\pi$-Bindung mit anderen Atomen in der Gruppe eingehen.

**3.** Zusammensetzung nach Anspruch 1, die mindestens 1 $cm^3$ Sauerstoff pro Gramm Zusammensetzung aufnehmen kann.

**4.** Zusammensetzung nach Anspruch 1, zudem umfassend einen heteroatomhaltigen Rest, der direkt an das Kohlenstoffatom gebunden ist, wobei ein Allyl-Wasserstoffatom oder das Kohlenstoffatom an das Sauerstoffatom eines Etherrests gebunden ist.

**5.** Zusammensetzung nach Anspruch 4, wobei die Reste solche Reste umfassen, die mit mindestens einem Rest substituiert sind, und zwar ausgewählt aus der Gruppe Wasserstoff, Alkylresten mit 1 bis 18 Kohlenstoffatomen, Alkoxyresten mit 1 bis 16 Kohlenstoffatomen, Aminresten mit 1 bis 6 Kohlenstoffatomen, Ester- und Amidresten von Säuren mit 1 bis 16 Kohlenstoffatomen, Arylresten und substituierten Arylresten mit 6 bis 24 Kohlenstoffatomen und Aryletherresten und substituierten Aryletherresten mit 6 bis 24 Kohlenstoffatomen.

**6.** Zusammensetzung nach Anspruch 4, wobei der heteroatomhaltige Rest ausgewählt ist aus der Gruppe der Ester-, Amid- und Imidreste.

**7.** Zusammensetzung nach Anspruch 6, wobei die Ester-, Amid- und Imidreste direkt an das Ethylen- oder Polyethylengerüst gebunden sind.

**8.** Zusammensetzung nach Anspruch 7, wobei der Esterrest über das Kohlenstoffatom des Esterrestes direkt an das Ethylen- oder Polyethylengerüst gebunden ist.

**9.** Zusammensetzung nach Anspruch 7, wobei der Amidrest über das Kohlenstoffatom des Amidrests direkt an das Ethylen- oder Polyethylengerüst gebunden ist.

**10.** Zusammensetzung nach Anspruch 7, wobei der heteroatomhaltige Rest ausgewählt ist aus der Gruppe der Ester- und Amidreste.

**11.** Zusammensetzung nach Anspruch 10, wobei die Komponente ein Polymer mit einem Ethylen- oder Polyethylengerüst umfasst und zwischen 1 und 17,9 Molprozent Poly(1,2-butadienyl)ester-, 6,6-Dimethylbicylo[3.1.1]-hept-2-enethylester-, 3-Methyl-3-butenylester-, 2,6-Dimethyloct-2,6-dienylester-, Cinnamylester-, Trimethylpropandiallyletherester-, 2,6,10-Trimethyldodec-2,6,10-trienylester-, Oleylester- und/oder Linoleylester-Reste direkt an das Ethylen- oder Polyethylengerüst gebunden sind.

**12.** Zusammensetzung nach Anspruch 11, die zwischen 20 und 200 Mol der Reste pro Mol Übergangsmetallelement

enthält.

**13.** Zusammensetzung nach Anspruch 12, wobei das Übergangsmetallsalz Kobaltneodecanoat und/oder Kobaltbenzoat umfasst.

**14.** Zusammensetzung nach Anspruch 11, wobei das Polymer Natrium-, Zink-, Kalium- oder Ammonium-Gegenionen enthält.

**15.** Zusammensetzung nach Anspruch 11, wobei das Polymer zudem das Ethylen- oder Polyethylengerüst und seitenständige Carboxyreste umfasst.

**16.** Zusammensetzung nach Anspruch 11, wobei das Polymer zudem das Ethylen- oder Polyethylengerüst und seitenständige Alkylesterreste umfasst.

**17.** Zusammensetzung nach Anspruch 16, wobei die seitenständigen Alkylesterreste Methylesterreste umfassen.

**18.** Zusammensetzung nach Anspruch 17 mit etwa 0,3 bis etwa 17,2 Molprozent Methylesterresten.

**19.** Zusammensetzung nach Anspruch 17 mit etwa 0,3 bis etwa 8,9 Molprozent Methylesterresten.

**20.** Zusammensetzung nach Anspruch 4 mit 10 bis 2000 Mol Resten pro Mol Übergangsmetallelement.

**21.** Zusammensetzung nach Anspruch 4 mit 20 bis 200 Mol Resten pro Mol Übergangsmetallelement.

**22.** Zusammensetzung nach Anspruch 21, wobei das Übergangsmetallelement ein Kobaltsalz umfasst.

**23.** Zusammensetzung nach Anspruch 21, wobei das Übergangsmetallsalz ein Kobaltneodecanoat und/oder Kobaltbenzoat umfasst.

**24.** Zusammensetzung nach Anspruch 3, wobei das Übergangsmetallsalz und die Reste in einer solchen Menge zugegen sind, dass sie Sauerstoff aufnehmen.

**25.** Polymer-Zusammensetzung, hergestellt durch Umsetzen eines Ethylenalkylacrylat-Copolymers mit einer umesternden Verbindung, ausgewählt aus der Gruppe Allylalkohol und cyclischem Etheralkohol mit mindestens einem alpha-Wasserstoffatom, wobei die Zusammensetzung Alkylester-, Allyl- oder Etheresterreste besitzt, und wobei die Zusammensetzung ein Übergangsmetallsalz und eine Sauerstoffaufnahmerate größer gleich 1 $cm^3$ Sauerstoff pro g und Tag an der Luft bei 25°C und bei 1 atm Druck hat.

**26.** Zusammensetzung nach Anspruch 25 mit mehr als 5 Molprozent Allylester- und/oder Etheresterresten.

**27.** Zusammensetzung nach Anspruch 25, wobei das Ethylenalkylacrylatcopolymer eine mindestens etwa 6°F höhere Schmelztemperatur aufweist als ein in einem Mehrzonenautoklavreaktor hergestelltes Bezugs-Ethylen-Alkylacrylat-Copolymer und das Verhältnis von Alkylacrylat zu Ethylen in einer Reaktionszone bei der Herstellung des Bezugs-Copolymers etwa gleich dem Gesamt-Ethylen-Alkylacrylat-Verhältnis ist, das in den Mehrzonenautoklavreaktor geschickt wird.

**28.** Zusammensetzung, umfassend eine Verbindung mit einem Ethylen- oder Polyethylengerüst und seitenständigen Einheiten, die Allyl-Wasserstoff enthalten, wobei die Zusammensetzung ein Übergangsmetallsalz und eine Sauerstoffaufnahmerate größer gleich 1 $cm^3$ Sauerstoff pro g und Tag an der Luft bei 25°C und bei 1 atm Druck hat.

**29.** Zusammensetzung nach Anspruch 28, wobei die Einheiten mit dem Allyl-Wasserstoff cyclisch sind.

**30.** Zusammensetzung, umfassend eine Verbindung mit einem Ethylen- oder Polyethylengerüst und seitenständigen cyclischen Ethereinheiten mit mindestens einem alpha-Wasserstoffatom, ausgewählt aus Tetrahydrofurfuryl- und 2-Methyltetrahydropyranyl-Resten.

**31.** Zusammensetzung nach den Ansprüchen 28 oder 30, welche ein Copolymer ist aus Ethylen und einem Comonomer, ausgewählt aus der Gruppe Poly(1,2-butadienyl)acrylat, 6,6-Dimethylbicyclo[3.1.1]hept-2-enethylacrylat, 3-Methyl-3-butenylacrylat, 2,6-Dimethyloct-2,6-dienylacrylat, Cinnamylacrylat, Trimethylpropandiallyletheracrylat, 2,6,10-Trimethyldodec-2,6,10-trienylacrylat und Oleyl- und/oder Linoleylacrylat.

**32.** Zusammensetzung nach Anspruch 30, wobei die Ethereinheiten monocyclisch sind und 2 bis 7 Kohlenstoffatome enthalten.

**33.** Zusammensetzung nach Anspruch 28 oder 30, wobei mindestens ein Teil der seitenständigen Einheiten cyclisch ist.

**34.** Zusammensetzung nach Anspruch 30, wobei die Zusammensetzung ein Copolymer aus Ethylen und einem Comonomer ist, ausgewählt aus der Gruppe Tetrahydrofurfurylacrylat und 2-Methyltetrahydropyranacrylat.

**35.** Zusammensetzung, umfassend ein Polyethylengerüst und mindestens einen seitenständigen Rest, ausgewählt aus der Gruppe mit Oxazolin; $C_1$-$C_{18}$-Estern, bei denen mindestens ein Epoxyrest an einem Kohlenstoffatom substituiert ist; Polyamidestern und den nachstehenden Estern und Amiden:

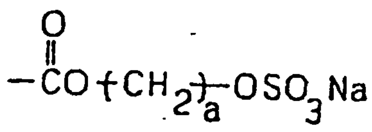

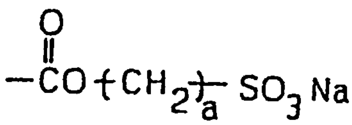

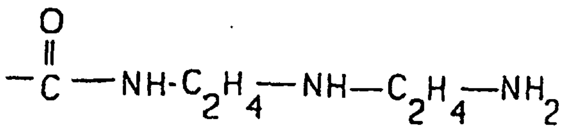

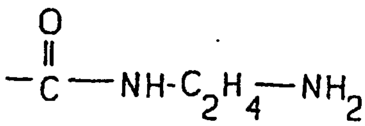

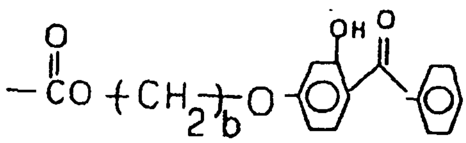

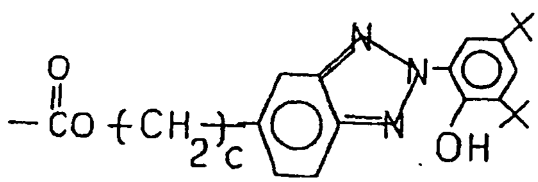

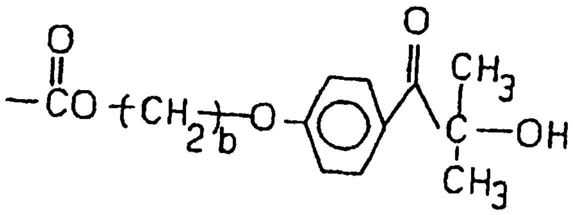

wobei a eine ganze Zahl zwischen 1 und einschließlich 18 ist, b eine ganze Zahl zwischen 1 und einschließlich 12 ist, und c eine ganze Zahl zwischen 0 und einschließlich 12 ist.

**36.** Folie, umfassend die Zusammensetzung nach Anspruch 3.

**37.** Schicht in einer Folie oder einem Gegenstand, die die Zusammensetzung nach Anspruch 3 umfasst.

**38.** Mehrschicht-Zusammensetzung, umfassend:

(A) eine erste Schicht mit einer Sauerstoffsperrschicht; und
(B) eine zweite Schicht mit der Zusammensetzung nach Anspruch 24.

**39.** Mehrschicht-Zusammensetzung nach Anspruch 38, zudem umfassend eine dritte Schicht mit einer Funktionsschicht.

**40.** Mehrschicht-Zusammensetzung nach Anspruch 38, zudem umfassend eine dritte Schicht mit einer Strukturschicht.

**41.** Mehrschicht-Zusammensetzung nach Anspruch 40, zudem umfassend eine vierte Schicht mit einer Funktionsschicht.

**42.** Feste, dickwandige Zusammensetzung, umfassend die Zusammensetzung nach Anspruch 3.

**43.** Feste, dickwandige Einfach- oder Mehrschichtfolien-Zusammensetzung oder Gegenstand mit einer sauerstoffaufnehmenden Zusammensetzung nach Anspruch 3.

**44.** Feste, dickwandige Mehrschichtfolien-Zusammensetzung oder Gegenstand nach Anspruch 43 mit einer sauerstoffaufnehmenden Zusammensetzung nach Anspruch 3.

**45.** Feste, dickwandige Mehrschichtfolien-Zusammensetzung oder Gegenstand nach Anspruch 44, wobei mindestens eine Schicht eine Sauerstoffsperrschicht umfasst.

**46.** Feste, dickwandige Mehrschichtfolien-Zusammensetzung oder Gegenstand nach Anspruch 45, wobei mindestens eine Schicht eine Funktionsschicht umfasst.

**47.** Feste, dickwandige Mehrschichtfolien-Zusammensetzung oder Gegenstand nach Anspruch 45 oder 46, wobei mindestens eine Schicht eine Strukturschicht umfasst.

**48.** Verfahren, umfassend:

A. Bilden einer Schmelze aus einem Polymer mit Polyethylengerüst und seitenständigen Ester- und/oder Säureeinheiten; und
B. Zusammenbringen der Schmelze mit einer Umesterungsverbindung, die eine Allyl- oder cyclische Ethereinheit mit mindestens einem alpha-Wasserstoffatom umfasst, in einem Extruder unter Umesterungsbedingungen, wobei das Polymer verestert und/oder umgeestert wird, aber keiner Alkoholyse unterworfen wird, und das Polymer nach der Veresterung oder Umesterung ein Polyethylengerüst und seitenständige Ester- und/oder Säureeinheiten aufweist; und
C. Vereinigen des Polymers mit einem Übergangsmetallsalz, so dass man eine Zusammensetzung mit einer Sauerstoffaufnahmerate größer gleich 1 $cm^3$ pro g und Tag an der Luft bei 25°C und bei 1 atm Druck erhält.

**49.** Verfahren nach Anspruch 48, zudem umfassend das Zusammenbringen der Schmelze mit einem Umesterungskatalysator

**50.** Verfahren nach Anspruch 48, wobei die Umsetzung im Wesentlichen bei Atmosphärendruck erfolgt.

**51.** Verfahren nach Anspruch 48, wobei das Polymer umfasst: Ethylenalkylacrylat-Copolymer, Ethylenacrylsäure-Copolymer oder Ethylenalkylacrylat-Copolymer, das mit Maleinsäureanhydrid gepfropft ist.

**52.** Verfahren nach Anspruch 51, wobei das Polymer Ethylenmethylacrylat-Copolymer umfasst.

**53.** Verfahren nach Anspruch 51 oder 52, wobei die Umesterungsverbindung eine Verbindung umfasst, augewählt aus der Gruppe Hydroxypoly(1,2-butadien), 6,6-Dimethylbicyclo[3.1.1]hept-2-enethanol, 3-Methyl-3-butenylalkohol, 2,6-Dimethyloct-2,6-dienylalkohol, Cinnamylalkohol, Trimethylpropandiallyletheralkohol, 2,6,10-Trimethyldodec-2,6,10-trienylalkohol, Ocenol, Oleo- und/oder Linoleoalkohol.

**54.** Verfahren nach Anspruch 48, wobei das Übergangsmetallsalz ein Kobaltmetallsalz umfasst.

**55.** Verfahren nach Anspruch 53, zudem umfassend das Bestrahlen des umgeesterten Polymers mit aktinischer Strahlung.

**56.** Verfahren, umfassend das Herstellen eines Polymers mit funktionellen Seitenketten, umfassend das Bilden einer Schmelze aus einem Polymer, das ein Ethylen- oder ein Polyethylengerüst aufweist, und das zur Veresterung und/oder Umesterung fähig ist, und Mischen der Schmelze mit einer Hydroxyform eines funktionellen Additivs, das eine Allyl- oder cyclische Ethereinheit mit mindestens einem alpha-Wasserstoffatom umfasst, unter Veresterungs- und/oder Umesterungsbedingungen, und Vereinigen des Polymers mit einem Übergangsmetallsalz, so dass man eine Zusammensetzung mit einer Sauerstoffaufnahmerate größer gleich 1 $cm^3$ pro g und Tag an der Luft bei 25°C und bei 1 atm Druck erhält.

**57.** Zusammensetzung, hergestellt durch das Verfahren nach einem der Ansprüche 51 bis 56.

**Revendications**

**1.** Composition comprenant un sel d'un métal de transition et un composé ayant un squelette éthylénique ou polyéthylénique, dans laquelle le composé possède des groupements appendus ou terminaux qui contiennent un atome de carbone qui forme un radical libre stabilisé par résonance dans des conditions de fixation d'oxygène, dans lequel les groupements appendus ou terminaux comprennent des groupements allyliques ou éther cyclique ayant au moins un atome d'hydrogène alpha, la composition ayant une vitesse de fixation d'oxygène égale ou supérieure à 1 $cm^3$ d'oxygène par gramme par jour dans l'air à 25°C et à une pression de 1 atm.

**2.** Composition suivant la revendication 1, dans laquelle le radical libre est stabilisé dans des conditions de fixation d'oxygène par un groupe adjacent contenant des électrons p qui sont non liés ou qui sont liés par des liaisons pi à d'autres atomes dans le groupe.

**3.** Composition suivant la revendication 1, qui est efficace pour fixer au moins 1 $cm^3$ d'oxygène par gramme de ladite composition.

**4.** Composition suivant la revendication 1, comprenant en outre un radical contenant un hétéroatome, radical qui est lié directement à l'atome de carbone ayant un atome d'hydrogène allylique ou à l'atome de carbone lié à l'atome d'oxygène d'un radical éther.

**5.** Composition suivant la revendication 4, dans laquelle lesdits radicaux comprennent des radicaux substitués avec au moins un radical choisi dans le groupe consistant en hydrogène, des radicaux alkyle contenant 1 à 18 atomes de carbone, des radicaux alkoxy ayant 1 à 16 atomes de carbone, des radicaux amine ayant 1 à 6 atomes de carbone, des radicaux ester et amide d'acide ayant 1 à 16 atomes de carbone, des radicaux aryle et des radicaux aryle substitués ayant 6 à 24 atomes de carbone, et des radicaux aryléther et radicaux aryléther substitués ayant 6 à 24 atomes de carbone.

**6.** Composition suivant la revendication 4, dans laquelle le radical contenant un hétéroatome est choisi dans le groupe

consistant en des radicaux ester, amide et imide.

**7.** Composition suivant la revendication 6, dans laquelle les radicaux ester, amide et imide sont liés directement au squelette éthylénique ou polyéthylénique.

**8.** Composition suivant la revendication 7, dans laquelle le radical ester est lié directement au squelette éthylénique ou polyéthylénique par un atome de carbone du radical ester.

**9.** Composition suivant la revendication 7, dans laquelle le radical amide est lié directement au squelette éthylénique ou polyéthylénique par l'atome de carbone du radical amide.

**10.** Composition suivant la revendication 7, dans laquelle le radical contenant un hétéroatome est choisi dans le groupe consistant en des radicaux ester et amide.

**11.** Composition suivant la revendication 10, dans laquelle ledit constituant comprend un polymère ayant un squelette éthylénique ou polyéthylénique et comprenant environ 1 à environ 17,9 % en mole de radicaux poly(1,2-butadiényl) ester, 6,6-diméthylbicyclo[3.1.1]hept-2-ène-éthylester, 3-méthyl-3-buténylester, 2,6-diméthyloct-2,6-diénylester, cinnamylester, triméthylpropanediallylétherester, 2,6,10-triméthyldodéc-2,6,10-triénylester, oléylester et/ou linoléylester liés directement au squelette éthylénique ou polyéthylénique.

**12.** Composition suivant la revendication 11, qui contient 20 à 200 moles desdits radicaux par mole d'élément de métal de transition.

**13.** Composition suivant la revendication 12, dans laquelle le sel de métal de transition comprend le néodécanoate de cobalt et/ou le benzoate de cobalt.

**14.** Composition suivant la revendication 11, dans laquelle le polymère contient des ions complémentaires sodium, zinc, potassium ou ammonium.

**15.** Composition suivant la revendication 11, dans laquelle ledit polymère comprend en outre ledit squelette éthylénique ou polyéthylénique et des radicaux carboxy appendus.

**16.** Composition suivant la revendication 11, dans laquelle ledit polymère comprend en outre ledit squelette éthylénique ou polyéthylénique et des radicaux ester alkylique appendus.

**17.** Composition suivant la revendication 16, dans laquelle les radicaux ester alkylique appendus comprennent des radicaux ester méthylique.

**18.** Composition suivant la revendication 17, qui contient environ 0,3 à environ 17,2 % en mole de radicaux ester méthylique.

**19.** Composition suivant la revendication 17, qui contient environ 0,3 à environ 8,9 % en mole de radicaux ester méthylique.

**20.** Composition suivant la revendication 4, qui contient 10 à 2000 moles desdits radicaux par mole d'élément de métal de transition.

**21.** Composition suivant la revendication 4, qui contient 20 à 200 moles desdits radicaux par mole d'élément de métal de transition.

**22.** Composition suivant la revendication 21, dans laquelle le sel de métal de transition comprend un sel de cobalt.

**23.** Composition suivant la revendication 21, dans laquelle le sel de métal de transition comprend un néodécanoate de cobalt et/ou benzoate de cobalt.

**24.** Composition suivant la revendication 3, dans laquelle le sel de métal de transition et lesdits radicaux sont présents en une quantité qui est efficace pour fixer l'oxygène.

**25.** Composition de polymère préparée en faisant réagir un copolymère éthylène-acrylate d'alkyle avec un composé transestérifiant choisi dans le groupe consistant en l'alcool allylique et un éther-alcool cyclique ayant au moins un atome d'hydrogène alpha, ladite composition comprenant des radicaux ester alkylique et radicaux allyliques ou éther-ester, la composition comprenant un sel de métal de transition et ayant une vitesse de fixation d'oxygène égale ou supérieure à 1 $cm^3$ d'oxygène par gramme par jour dans l'air à 25°C et à une pression de 1 atm.

**26.** Composition suivant la revendication 25, comprenant plus de 5 % en mole de radicaux ester allylique et/ou éther-ester.

**27.** Composition suivant la revendication 25, dans laquelle le copolymère éthylène-acrylate d'alkyle a une température de point de fusion supérieure d'au moins environ 6°F à celle d'un copolymère éthylène-acrylate d'alkyle de référence, le copolymère de référence étant préparé dans un réacteur autoclave à zones multiples et le rapport de l'acrylate d'alkyle à l'éthylène dans une zone réactionnelle lors de la préparation du copolymère de référence étant approximativement égal au rapport total de l'éthylène à l'acrylate d'alkyle introduit dans le réacteur autoclave à zones multiples.

**28.** Composition comprenant un composé ayant un squelette éthylénique ou polyéthylénique et des groupements appendus contenant de l'hydrogène allylique, la composition comprenant un sel de métal de transition et ayant une vitesse de fixation d'oxygène égale ou supérieure à 1 $cm^3$ d'oxygène par gramme par jour dans l'air à 25°C et à une pression de 1 atm.

**29.** Composition suivant la revendication 28, dans laquelle les groupements contenant de l'hydrogène allylique sont des groupements cycliques.

**30.** Composition comprenant un composé ayant un squelette éthylénique ou polyéthylénique et des groupements éther cycliques appendus ayant au moins un atome d'hydrogène alpha, choisis entre des radicaux tétrahydrofurfuryle et 2-méthyl-tétrahydropyrannyle.

**31.** Composition suivant la revendication 28 ou 30, qui est un copolymère d'éthylène et d'un comonomère choisi dans le groupe consistant en poly(1,2-butadiényl)-acrylate, acrylate de 6,6-diméthylbicyclo[3.1.1]hept-2-ène-éthyl, acrylate de 3-méthyl-3-butényle, acrylate de 2,6-diméthyloct-2,6-diényle, acrylate de cinnamyle, acrylate d'éther diallylique de triméthylpropane, acrylate de 2,6,10-triméthyldodéc-2,6,10-triényle et acrylate d'oléyle et/ou de linoléyle.

**32.** Composition suivant la revendication 30, dans laquelle les groupements éther sont monocycliques et contiennent 2 à 7 atomes de carbone.

**33.** Composition suivant la revendication 28 ou 30, dans laquelle au moins une partie des groupements appendus est constituée de groupements cycliques.

**34.** Composition suivant la revendication 30, qui est un copolymère d'éthylène et d'un comonomère choisi dans le groupe consistant en l'acrylate de tétrahydrofurfuryle et l'acrylate de 2-méthyltétrahydropyranne.

**35.** Composition comprenant un squelette polyéthylénique et au moins un radical appendu choisi dans le groupe consistant en l'oxazoline ; des esters en $C_1$ à $C_{18}$ qui possèdent au moins un radical époxy comme substituant sur un atome de carbone ; des esters de polyamides ; et les esters et amides suivants :

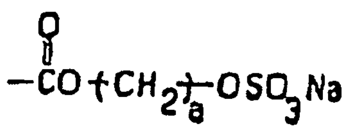

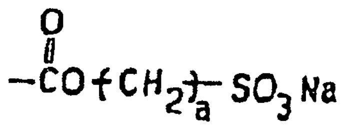

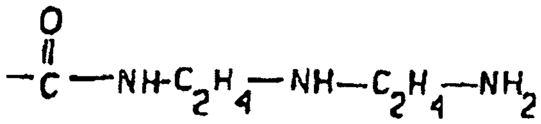

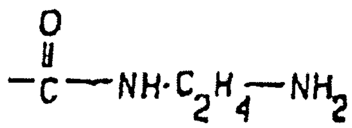

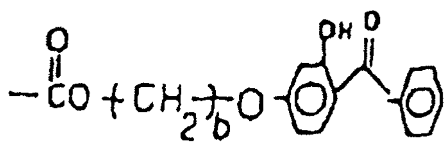

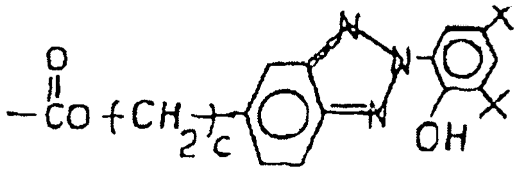

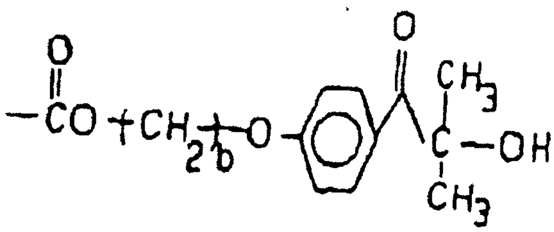

dans lesquels a représente un nombre entier de 1 à 18 inclus, b représente un nombre entier de 1 à 12 inclus et c représente un nombre entier de 0 à 12 inclus.

**36.** Film comprenant la composition suivant la revendication 3.

**37.** Couche dans un film ou article comprenant la composition suivant la revendication 3.

**38.** Composition multicouche comprenant :

A) une première couche comprenant une couche de barrière à l'oxygène ; et
B) une seconde couche comprenant la composition suivant la revendication 24.

**39.** Composition multicouche suivant la revendication 38, comprenant en outre une troisième couche comprenant une

couche fonctionnelle.

**40.** Composition multicouche suivant la revendication 38, comprenant en outre une troisième couche comprenant une couche structurale.

**41.** Composition multicouche suivant la revendication 40, comprenant en outre une quatrième couche comprenant une couche fonctionnelle.

**42.** Composition rigide à parois épaisses comprenant la composition suivant la revendication 3.

**43.** Film mono- ou multicouche, composition rigide à parois épaisses ou article comprenant une composition fixant l'oxygène suivant la revendication 3.

**44.** Film multicouche, composition rigide à parois épaisses ou article suivant la revendication 43, comprenant une composition fixant l'oxygène suivant la revendication 3.

**45.** Film multicouche, composition rigide à parois épaisses ou article suivant la revendication 44, dans lequel au moins une couche comprend une couche de barrière à l'oxygène.

**46.** Film multicouche, composition rigide à parois épaisses ou article suivant la revendication 45, dans lequel au moins une couche comprend une couche fonctionnelle.

**47.** Film multicouche, composition rigide à parois épaisses ou article suivant la revendication 45 ou 46, dans lequel au moins une couche comprend une couche structurale.

**48.** Procédé comprenant les étapes consistant :

A. à former une masse fondue d'un polymère ayant un squelette polyéthylénique et des groupements ester et/ou acide appendus ; et
B. à mettre en contact la masse fondue avec un composé transestérifiant, ledit composé transestérifiant comprenant un groupement allylique ou éther cyclique ayant au moins un atome d'hydrogène alpha, dans une extrudeuse dans des conditions de transestérification, dans laquelle le polymère subit une estérification et/ou une transestérification mais non une alcoolyse, et le polymère, après l'estérification ou la transestérification, possède un squelette polyéthylénique et des groupements ester et/ou acide appendus, et
C. à combiner le polymère avec un sel de métal de transition, ce qui permet d'obtenir une composition ayant une vitesse de fixation d'oxygène égale ou supérieure à 1 $cm^3$ d'oxygène par gramme par jour dans l'air à 25°C et à une pression de 1 atm.

**49.** Procédé suivant la revendication 48, comprenant en outre la mise en contact de la masse fondue avec un catalyseur de transestérification.

**50.** Procédé suivant la revendication 48, dans lequel la réaction se produit essentiellement à la pression atmosphérique.

**51.** Procédé suivant la revendication 48, dans lequel le polymère comprend un copolymère éthylène-acrylate d'alkyle, un copolymère éthylène-acide acrylique ou un copolymère éthylène-acrylate d'alkyle greffé avec de l'anhydride maléique.

**52.** Procédé suivant la revendication 51, dans lequel le polymère comprend un copolymère éthylène-acrylate de méthyle.

**53.** Procédé suivant la revendication 51 ou 52, dans lequel le composé transestérifiant comprend un composé choisi dans le groupe consistant en l'hydroxy-poly-(1,2-butadiène), le 6,6-diméthylbicyclo[3.1.1]hept-2-ène-éthanol, l'alcool 3-méthyl-3-buténylique, l'alcool 2,6-diméthyloct-2,6-diénylique, l'alcool cinnamylique, l'alcool d'éther diallylique de triméthylpropane, l'alcool 2,6,10-triméthyldodéc-2,6,10-triénylique, l'océnol, l'oléo-alcool et/ou le linoléo-alcool.

**54.** Procédé suivant la revendication 48, dans lequel le sel de métal de transition comprend un sel métallique de cobalt.

**55.** Procédé suivant la revendication 53, comprenant en outre l'irradiation du polymère transestérifié avec un rayonnement actinique.

**56.** Procédé comprenant la préparation d'un polymère ayant des chaînes latérales fonctionnelles, comprenant la formation d'une masse fondue d'un polymère ayant un squelette éthylénique ou polyéthylénique et apte à l'estérification et/ou la transestérification et le mélange à la masse fondue d'une forme hydroxylique d'un additif fonctionnel comprenant un groupement allylique ou éther cyclique ayant au moins un atome d'hydrogène alpha dans des conditions d'estérification et/ou de transestérification, et à combiner le polymère avec un sel de métal de transition, ce qui permet d'obtenir une composition ayant une vitesse de fixation d'oxygène égale ou supérieure à 1 $cm^3$ d'oxygène par gramme par jour dans l'air à 25°C et à une pression de 1 atm.

**57.** Composition produite par le procédé suivant l'une quelconque des revendications 51 à 56.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 4908151 A
- US 5194478 A
- US 5153038 A
- US 5116660 A
- US 5143769 A
- US 5089323 A
- EP 0519616 A
- US 5021515 A
- US 5159005 A
- EP 0380319 A
- US 9000504 W
- US 9000578 W
- EP 0507207 A
- WO 9502616 A
- US 4717759 A
- US 4994539 A
- US 4736007 A
- US 4767820 A
- US 5023284 A
- US 3264272 A
- US 5211875 A
- US 07764861 B
- US 07947870 B
- US 08233180 B
- US 4506056 A
- US 08144173 B
- US 5576396 A

### Non-patent literature cited in the description

- **M. LAMBLA et al.** *27 Polymer Sci. and Eng'g,* September 1987, (16), 1221-28